(19) Europäisches Patentamt
European Patent Office
Office européen des brevets

(11) EP 4 495 678 A1

(12) **EUROPEAN PATENT APPLICATION**
published in accordance with Art. 153(4) EPC

(43) Date of publication:
**22.01.2025 Bulletin 2025/04**

(21) Application number: **23770115.6**

(22) Date of filing: **24.01.2023**

(51) International Patent Classification (IPC):
***G02C 7/00*** (2006.01) ***B29C 51/10*** (2006.01)
***B29C 51/14*** (2006.01) ***B29C 51/16*** (2006.01)
***B32B 7/022*** (2019.01) ***B32B 27/40*** (2006.01)
***C08G 18/38*** (2006.01) ***G02B 1/04*** (2006.01)
***G02C 7/10*** (2006.01)

(52) Cooperative Patent Classification (CPC):
**B29C 51/10; B29C 51/14; B29C 51/16; B32B 7/022; B32B 27/40; C08G 18/38; G02B 1/04; G02C 7/00; G02C 7/10**

(86) International application number:
**PCT/JP2023/002153**

(87) International publication number:
**WO 2023/176153 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 JP 2022044196**
**18.03.2022 JP 2022044197**

(71) Applicant: **MITSUI CHEMICALS, INC.**
**Tokyo 104-0028 (JP)**

(72) Inventors:
- **WATANABE, Makoto**
  **Omuta-shi, Fukuoka 836-8610 (JP)**
- **OIKI, Motoharu**
  **Tokyo 104-0028 (JP)**
- **KAWATO, Nobuo**
  **Omuta-shi, Fukuoka 836-8610 (JP)**

(74) Representative: **Mewburn Ellis LLP**
**Aurora Building**
**Counterslip**
**Bristol BS1 6BX (GB)**

(54) **POLYTHIOURETHANE FILM, MATERIAL FOR SPECTACLE LENS, SPECTACLE LENS, AND PRODUCTION METHOD FOR SPECTACLE LENS**

(57) A polythiourethane film comprising polythiourethane, wherein the polythiourethane is a reaction product of a bifunctional thiol compound, a trifunctional or higher thiol compound, and an isocyanate compound.

FIG.1

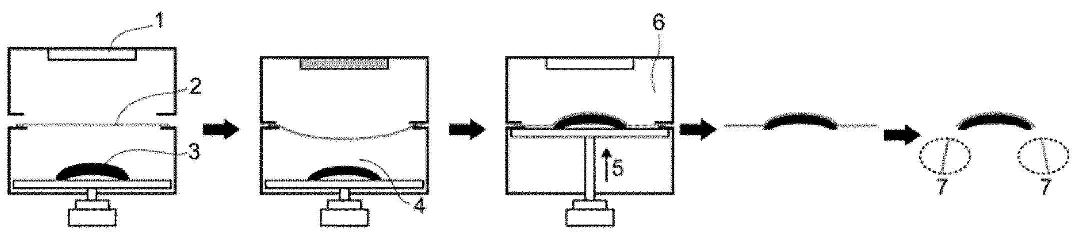


EP 4 495 678 A1

## Description

Technical Field

The present disclosure relates to a polythiourethane film, an eyeglass lens material, an eyeglass lens, and a method of producing an eyeglass lens.

Background Art

Plastic lenses are rapidly becoming popular for optical elements such as eyeglass lenses and camera lenses because plastic lenses are lighter and more unlikely to break than inorganic lenses. In recent years, functional lenses with various functions have been studied.

Examples of functional lenses include photochromic lenses having photochromic performance.

Functional lenses often contain, for example, colorants, pigments, dyes such as visible light-absorbing dyes, photochromic dyes, or UV absorbers.

Patent Document 1 describes a film composed of a resin having a thiourethane bond, wherein the resin's molar ratio of sulfur to nitrogen (S/N) ranges from 0.8 to less than 3.

For example, Patent Document 2 describes an optical element comprising a lens substrate, an adhesive layer disposed on the lens substrate, and a functional film disposed on the adhesive layer, wherein the adhesive layer contains ester polyurethane, the degree of elongation of the adhesive layer is from 1050% to 1400%, and the Young's modulus of the adhesive layer is 400 $N/mm^2$ or less.

For example, Patent Document 3 describes a production method for a resin lens, comprising using a base lens as a first mold, disposing a second mold on one side or both sides of the first mold so as to have a substantially constant predetermined gap, forming a cavity by sealing a circumferential gap between the first and second molds with taping or a gasket, and injecting a liquid resin raw material containing a functionality imparting agent into the cavity so as to cast-molding and a functional resin layer to integrate the base lens and the functional resin layer, characterized in that the first mold is a base lens in which a thermoplastic elastomer adhesive layer is formed on the side surface on which the functional resin layer is formed.

Patent Document 1: WO2011/058754
Patent Document 2: Japanese Patent Application Laid-Open (JP-A) No. 2014-202904
Patent Document 3: WO2014/125738

SUMMARY OF INVENTION

Technical Problem

Functional lenses include layered lenses in which a film is inserted into a lens substrate, lenses in which dyes are kneaded into a substrate, and the like. Examples of the materials of films used for layered lenses include polyethylene terephthalate film, acrylic film, and polyvinyl alcohol film.

However, when attempting to obtain a functional lens by heating these films and bonding them to a lens substrate, there is a problem in that streak unevenness occurs in the film during bonding.

Against this background, a thiourethane film was studied as a film other than a polyethylene terephthalate film, an acrylic film, and the like (see, for example, Patent Document 1).

Further, functional lenses require the film to conform to the shape of the lens substrate. Lens substrates have various shapes, but making a film conform to a highly curved lens substrate has been particularly difficult.

In addition, the functional lens having the above-described structure is also required to have solvent resistance.

It is conceivable to layer a layer such as a hard coat layer on the film in the functional lens having the above-described structure. At that time, treatment with an organic solvent, an alkaline aqueous solution, or the like is often performed, and the film is often damaged by the solvent.

An object of the first embodiment of the disclosure is to provide a polythiourethane film with excellent conformability and solvent resistance, an eyeglass lens material comprising the polythiourethane film, an eyeglass lens, and a method of producing an eyeglass lens.

Solution to Problem

The solution to the above-described problem includes the following embodiments.

<1> A polythiourethane film comprising polythiourethane,
wherein the polythiourethane is a reaction product of a bifunctional thiol compound, a trifunctional or higher thiol compound, and an isocyanate compound.
<2> The polythiourethane film according to <1>, wherein a thiol equivalent of the bifunctional thiol compound with respect to a total thiol equivalent of 100% for the bifunctional thiol compound and the trifunctional or higher thiol compound is from 20% to 95%.
<3> The polythiourethane film according to <1> or <2>, which has a thickness of from 100 μm to 600 μm.
<4> The polythiourethane film according to any one of <1> to <3>, which has a minimum storage modulus at from 30°C to 160°C, wherein the minimum storage modulus is from $3.00 \times 10^6$ Pa to $1.40 \times 10^7$ Pa.
<5> The polythiourethane film according to any one of <1> to <4>, wherein the polythiourethane has a molecular weight between crosslinking points of from 950 to 3000.
<6> The polythiourethane film according to any one of <1> to <5>, further comprising a functional dye.
<7> The polythiourethane film according to <6>, wherein the functional dye is a specific wavelength cut-off dye or a photochromic dye.
<8> An eyeglass lens material comprising the polythiourethane film according to any one of <1> to <7> and a polyurethane adhesive layer that is attached to at least one side of the polythiourethane film.
<9> The eyeglass lens material according to <8>, wherein the polyurethane adhesive layer comprises a polycarbonate-based polyurethane containing an anionic functional group.
<10> The eyeglass lens material according to <8> or <9>, further comprising a hard coat layer as an outermost layer.
<11> An eyeglass lens comprising:

the eyeglass lens material according to any one of <8> to <10>; and
an eyeglass lens substrate attached to the polyurethane adhesive layer in the eyeglass lens material.

<12> The eyeglass lens according to <11>, wherein the eyeglass lens substrate has a convex or concave surface attached to the polyurethane adhesive layer in the eyeglass lens material.
<13> The eyeglass lens according to <11> or <12>, wherein the eyeglass lens substrate has a curvature radius of from 62.5 mm to 125.0 mm.
<14> The eyeglass lens according to any one of <11> to <13>, which comprises two or more sheets of the eyeglass lens material.
<15> The eyeglass lens according to any one of <10> to <14>, wherein the eyeglass lens substrate comprises at least one selected from the group consisting of polyacrylate, polyethylene terephthalate, polycarbonate, polytriacetylcellulose, polyvinyl alcohol, polyester, polyamide, polyepoxy, polyepisulfide, polyurethane, and polythiourethane.
<16> A method of producing an eyeglass lens, comprising a step of bonding the eyeglass lens material according to any one of <8> to <10> to an eyeglass lens substrate, thereby obtaining an eyeglass lens.
<17> The method of producing an eyeglass lens according to <16>, comprising a step of bonding the eyeglass lens material to the eyeglass lens substrate using a vacuum-pressure forming machine, thereby obtaining the eyeglass lens.

Advantageous Effects of Invention

The first embodiment of the disclosure can provide a polythiourethane film with excellent conformability and solvent resistance, an eyeglass lens material comprising the polythiourethane film, an eyeglass lens, and a method of producing an eyeglass lens.

BRIEF DESCRIPTION OF DRAWINGS

FIG. 1 is a diagram for explaining bonding using a vacuum-pressure forming machine.
FIG. 2 is a graph showing the transmittance of a lens with a film in Example 1.

DESCRIPTION OF EMBODIMENTS

A numerical range represented using "to" in the disclosure means a range including the numerical values described before and after "to" as lower and upper limits.
The term "step" used in the disclosure includes not only an independent step but also a step as long as its intended purpose is achieved, even if it cannot be clearly distinguished from other steps.

In the disclosure, in a case in which there are a plurality of substances corresponding to each component in the composition, the amount of each component contained in the composition is the total amount of the plurality of substances present in the composition unless otherwise specified.

In the numerical ranges described in a stepwise manner in the disclosure, the upper limit or lower limit described in one numerical range may be replaced with the upper limit or lower limit of another numerical range described in a stepwise manner. Also, in the numerical ranges described in the disclosure, the upper or lower limits of the numerical ranges may be replaced with the values shown in the Examples.

In the disclosure, in a case in which there are a plurality of substances corresponding to each component in the material, the amount of each component in the material is the total amount of the plurality of substances present in the material unless otherwise specified.

"Poly(thio)urethane" refers to polyurethane or polythiourethane in the disclosure.

"Polycarbonate-based polyurethane" refers to polyurethane comprising constitutional units derived from an active hydrogen compound having a polycarbonate structure in the disclosure.

"Polycarbonate-based polyurethane having an anionic functional group" refers to polycarbonate-based polyurethane comprising constitutional units derived from an active hydrogen compound having an anionic functional group in the disclosure. Examples of an anionic functional group include a carboxy group, a sulfonic acid group, a phosphoric acid group, and a betaine structure-containing group such as sulfobetaine.

The disclosure encompasses the following first and second embodiments.

Hereinafter, the first and second embodiments will be described in detail.

(First Embodiment)

<<Polythiourethane Film>>

The polythiourethane film of the first embodiment (also simply referred to as "film" in the first embodiment) comprises polythiourethane. The polythiourethane is a reaction product of a bifunctional thiol compound, a trifunctional or higher thiol compound, and an isocyanate compound.

The polythiourethane film of the first embodiment has the above-described configuration; thus, it has excellent conformability and solvent resistance.

Functional lenses include layered lenses in which a film is inserted into a lens substrate, lenses in which dyes are kneaded into a substrate, and the like. Examples of the materials of films used for layered lenses include polyethylene terephthalate film, acrylic film, and polyvinyl alcohol film. All of these are thermoplastic resin films.

However, when attempting to obtain a functional lens by heating these thermoplastic resin films and bonding them to a lens substrate, there is a problem in that streak unevenness occurs in the film during bonding, or the adhesion with the hard coat layer is insufficient. In the case of insufficient adhesion with the hard coat layer, it is required to dispose of a primer layer between the thermoplastic resin film and the hard coat layer.

The present inventors expected that the adhesion with the hard coat layer could be obtained by providing a material similar to the lens substrate to the surface, focused on a thiourethane film, and examined how to bond the film to the lens.

Since thermosetting resin is a resin that polymerizes when heated, forming a polymeric network structure that hardens and becomes irreversible, no consideration has been given conventionally to heating and stretching a film of such thermosetting resin and bonding it to a lens substrate.

The present inventors focused on the above-described points and developed a thiourethane film that can be vacuum-formed or pressure-formed.

It is preferable that the polythiourethane film of the first embodiment comprises a polythiourethane having a molecular weight between crosslinking points of from 950 to 3000.

To improve the conformability of the film in functional lenses where a film comprising a photochromic compound is bonded to the lens substrate, a method of imparting softness to the film was devised. However, as the softness of the film improved, the solvent resistance of the film tended to decrease. In other words, the conformability and solvent resistance of the film are in a trade-off relationship, and it has been difficult to achieve both.

As a result of intensive studies, the inventors found that by selecting polythiourethane as a film material and limiting the molecular weight between crosslinking points of the polythiourethane to a specific range, it is possible to achieve both conformability and solvent resistance of the film.

According to the inventors' studies, when the molecular weight between crosslinking points of polythiourethane is large, the crosslinking density decreases, making the film softer, improving conformability, and lowering solvent resistance.

On the other hand, when the molecular weight between crosslinking points of polythiourethane is small, the crosslinking density increases, and the film becomes harder, resulting in lower conformability and improved solvent

resistance.

The inventors further studied and found that when the molecular weight between crosslinking points of polythiourethane is within a specific range, it is possible to achieve both conformability and solvent resistance of the film, thereby obtaining the polythiourethane film of the first embodiment.

<Polythiourethane>

It is preferable that the polythiourethane film of the first embodiment comprises a polythiourethane having a molecular weight between crosslinking points of from 950 to 3000.

(Molecular Weight between Crosslinking Points)

The polythiourethane in the first embodiment has a molecular weight between crosslinking points of from 950 to 3000.

The molecular weight between crosslinking points means the molecular weight between one crosslinking point and another crosslinking point.

The smaller the molecular weight between crosslinking points, the more inflexible the film and the larger the crosslinking point density.

The larger the molecular weight between crosslinking points, the more flexible the film and the smaller the crosslinking point density.

From the viewpoint of conformability of the film, the polythiourethane in the first embodiment has a molecular weight between crosslinking points of preferably 1000 or more, more preferably 1050 or more.

From the viewpoint of solvent resistance of the film, the polythiourethane in the first embodiment has a molecular weight between crosslinking points of 2800 or less, more preferably 2500 or less, still more preferably 2000 or less.

The molecular weight between crosslinking points can be adjusted by, for example, adjusting the content ratio between a bifunctional thiol compound and a trifunctional or higher thiol compound, which may be used as raw materials for polythiourethane.

(Method of Measuring Molecular Weight between Crosslinking Points)

The molecular weight between crosslinking points is calculated using the following formula.

$$\text{Molecular weight between crosslinking points } Mc = 2(1+\mu)\rho RT/E$$

- $\mu$: Poisson's ratio (Poisson's ratio is assumed to be 0.5.)
- $\rho$: Polythiourethane density ($g/m^3$)
- R: Gas constant (i.e., 8.314 J/K/mol)
- E: Polythiourethane storage modulus (Pa)
- T: Absolute temperature (K)

Here, the temperature T is 150°C (i.e., 423.15K), and the elastic modulus E is the elastic modulus at 150°C.

Note that 0°C is 273.15K, and an increase or decrease of 1°C is equivalent to an increase or decrease of 1K.

(Measurement of Softening Temperature and Storage Modulus)

The viscoelasticity of polythiourethane is measured using a dynamic viscoelasticity measuring device (e.g., DMA8000 manufactured by PerkinElmer).

A test piece having a size of 30 mm $\times$ 5 mm and a thickness of 2.5 mm is prepared from polythiourethane. The measurement system is a single cantilever rectangle. The temperature is raised from 30°C to 160°C at a heating rate of 3°C/min, and the measurement is performed at a frequency of 1.0 Hz. The temperature at which tan $\delta$ obtained by the measurement is maximum is defined as the softening temperature.

In addition, the storage modulus is measured every minute as the temperature rises.

It is preferable that the polythiourethane film of the first embodiment has a minimum storage modulus at from 30°C to 160°C, and the minimum storage modulus is from $3.00 \times 10^6$ Pa to $1.40 \times 10^7$ Pa.

The expression "has a minimum storage modulus at from 30°C to 160°C" means that the temperature at which the storage modulus is minimum is within a range of from 30°C to 160°C. The "minimum storage modulus" refers to a storage modulus at a temperature at which the storage modulus is minimum.

The minimum storage modulus is preferably 4.00 $\times$ $10^6$ Pa or more, more preferably 6.00 $\times$ $10^6$ Pa or more.
The minimum storage modulus is more preferably 1.30 $\times$ $10^7$ Pa or less, still more preferably 1.25 $\times$ $10^7$ Pa or less.
The method for measuring the minimum storage modulus is as described above.
Polythiourethane can be used without particular limitations.
Polythiourethane is a reaction product of a bifunctional thiol compound, a trifunctional or higher thiol compound, and an isocyanate compound.

(Isocyanate Compound)

The isocyanate compound may be a linear isocyanate compound or a cyclic isocyanate compound.
Examples of the isocyanate compound include an aliphatic isocyanate compound, an alicyclic isocyanate compound, an aromatic isocyanate compound, a heterocyclic isocyanate compound, and an aromatic and aliphatic isocyanate compound, which are used singly, or in a mixture of two or more kinds thereof. These isocyanate compounds may include dimers, trimers, prepolymers, and the like.
Examples of the isocyanate compound include compounds exemplified in WO2011/055540.
The isocyanate compound comprises preferably a linear isocyanate compound and a cyclic isocyanate compound, more preferably an aliphatic isocyanate compound and an aromatic isocyanate compound.
Accordingly, for example, the glass transition temperature Tg and refractive index can be readily adjusted within a desirable range.
Among the above, an aliphatic isocyanate compound is preferably at least one selected from the group consisting of pentamethylene diisocyanate, hexamethylene diisocyanate, bis(isocyanatocyclohexyl)methane, 2,5-bis(isocyanatomethyl)bicyclo-[2.2.1]-heptane, and 2,6-bis(isocyanatomethyl)bicyclo-[2.2.1]-heptane.
Among the above, an aromatic isocyanate compound is preferably at least one selected from the group consisting of xylylene diisocyanate, tolylene diisocyanate, 4,4'-diphenylmethane diisocyanate, and phenylene diisocyanate.

(Thiol Compound)

Examples of the thiol compound include a polythiol compound having two or more mercapto groups and a hydroxythiol compound having one or more mercapto groups and one or more hydroxyl groups, which are used singly, or in a mixture of two or more kinds thereof. Examples of these thiol compounds include compounds exemplified in WO2016/125736.

(Bifunctional Thiol Compound)

Examples of the bifunctional thiol compound include: methanedithiol, ethanedithiol, 1,3-propanedithiol, 1,2-ethanedithiol, 1,2-cyclohexane dithiol, bis(2-mercaptoethyl)ether, diethylene glycol bis(2-mercaptoacetate), diethylene glycol bis(3-mercaptopropionate), ethylene glycol bis(2-mercaptoacetate), ethylene glycol bis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 2,5-dimercaptomethyl-1,4-dithiane, 2,5-dimercapto-1,4-dithiane, 2,5-dimercaptomethyl-2,5-dimethyl-1,4-dithiane, and thioglycolic acid esters and mercaptopropionic acid esters thereof;

aliphatic polythiol compounds such as bis(2-mercaptoethyl)sulfide, hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), and 4,6-bis(mercaptomethylthio)-1,3-dithiane;
aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 2,5-toluenedithiol, 3,4-toluenedithiol, 1,5-naphthalenedithiol, and 2,6-naphthalenedithiol; and
heterocyclic polythiol compounds such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane.

Among the above, more preferably, at least one selected from the group consisting of bis(mercaptoethyl)sulfide, 1,3-propanedithiol, 2,5-dimercaptomethyl-1,4-dithiane, and 4,6-bis(mercaptomethylthio)-1,3-dithiane is contained as a bifunctional thiol compound.

(Trifunctional or Higher Thiol Compound)

Examples of the trifunctional or higher thiol compound include: 1,2,3-propanetrithiol, tetrakis(mercaptomethyl)methane, trimethylol propanetris(2-mercaptoacetate), trimethylol propanetris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, and thioglycolic acid esters and mercaptopropionic acid esters thereof;

aliphatic polythiol compounds such as 1,1,3,3-tetrakis(mercaptomethylthio)propane, 1,1,2,2-tetrakis(mercaptomethylthio)ethane, tris(mercaptomethylthio)methane, and tris(mercaptoethylthio)methane;
aromatic polythiol compounds such as 1,3,5-trimercaptobenzene, 1,3,5-tris(mercaptomethyl)benzene, 1,3,5-tris(mercaptomethyleneoxy)benzene, and 1,3,5-tris(mercaptoethyleneoxy)benzene; and
heterocyclic polythiol compounds such as 2,4,6-trimercapto-s-triazine, 2,4,6-trimercapto-1,3,5-triazine, and 2-(2,2-bis(mercaptomethylthio)ethyl)-1,3-dithietane.

It is preferable that at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(2-mercaptoacetate), pentaerythritol tetrakis(3-mercaptopropionate), 1,1,3,3-tetrakis(mercaptomethylthio)propane, and 2-(2,2-bis(mercaptomethylthio)ethyl)-1,3-dithietane is contained as a trifunctional or higher thiol compound.

As described above, the molecular weight between crosslinking points can be adjusted by, for example, adjusting the content ratio between a bifunctional thiol compound and a trifunctional or higher thiol compound, which may be used as raw materials for polythiourethane.

As the thiol equivalent of a bifunctional thiol compound in polythiourethane in the first embodiment increases, the molecular weight between crosslinking points tends to increase. Meanwhile, as the thiol equivalent of a trifunctional or higher thiol compound in polythiourethane increases, the molecular weight between crosslinking points tends to decrease.

For example, in a case in which a bifunctional thiol compound and a trifunctional or higher thiol compound are used as raw materials of polythiourethane, the thiol equivalent of a bifunctional thiol compound is preferably from 20% to 95% with respect to a total thiol equivalent of a bifunctional thiol compound and a trifunctional or higher thiol compound of 100%.

As the thiol equivalent of a bifunctional thiol compound is 20% or more with respect to a total thiol equivalent of a bifunctional thiol compound and a trifunctional or higher thiol compound of 100%, the molecular weight between crosslinking points can be further increased. As a result, the film becomes flexible to an appropriate extent, resulting in excellent conformability.

From the above-described viewpoint, the thiol equivalent of a bifunctional thiol compound is preferably 30% or more, more preferably 35% or more, with respect to a total thiol equivalent of a bifunctional thiol compound and a trifunctional or higher thiol compound of 100%.

In a case in which the thiol equivalent of a bifunctional thiol compound is 95% or less with respect to a total thiol equivalent of a bifunctional thiol compound and a trifunctional or higher thiol compound of 100%, the molecular weight between crosslinking points can be further decreased. As a result, the film becomes inflexible to an appropriate extent, resulting in excellent solvent resistance.

From the above-described viewpoint, the thiol equivalent of a bifunctional thiol compound is preferably 80% or less, more preferably 70% or less, with respect to a total thiol equivalent of a bifunctional thiol compound and a trifunctional or higher thiol compound of 100%.

Assuming that the equivalent of all thiol compounds that polymerize with an isocyanate compound is 1, the thiol equivalent of each thiol compound is calculated by integrating the number of moles and the number of functional groups.

The equivalent ratio of the thiol group in the thiol compound to the isocyanato group in the isocyanate compound (thiol group/isocyanato group) is preferably from 0.8 to 1.2, more preferably from 0.85 to 1.15, and still more preferably from 0.9 to 1.1.

Within the above-described range, polythiourethane can be obtained, which is suitable for use as an optical

material, especially as a plastic lens material for eyeglasses.

<Functional Dye>

It is preferable that the polythiourethane film of the first embodiment further comprises a functional dye

Examples of the functional dye include dyes that block specific wavelengths (e.g., ultraviolet rays, visible light, near-infrared rays, and infrared rays), photochromic dyes (e.g., tetraazaporphyrin compounds and naphthopyran compounds) and infrared absorbing dyes.

(UV Absorber)

Specific examples of the UV absorber include benzotriazole-based UV absorbers, triazine-based UV absorbers, benzophenone-based UV absorbers, cyanoacrylate-based UV absorbers, diphenyl acrylate-based UV absorbers, phenolic UV absorbers, malonic acid ester-based UV absorbers, and oxanilide-based UV absorbers.

More preferred aspects of UV absorbers include malonic acid ester-based UV absorbers and oxanilide-based UV absorbers.

Specific examples of malonic acid ester-based UV absorbers include p-phenylene bis(methylenemalonic acid) tetraethyl ester and dimethyl p-methoxybenzylidene malonate.

Examples of commercially available products of malonic acid ester-based UV absorbers include HOSTAVIN PR-25 and HOSTAVIN B-CAP (manufactured by Clariant Chemicals Co., Ltd.).

Specific examples of oxanilide-based UV absorbers include 2-ethyl-2'-ethoxy-oxanilide and 2-isododecyl-2'-ethoxyoxanilide.

Examples of commercially available products of oxanilide-based UV absorbers include the trade names of HOSTAVIN VSU and HOSTAVIN 3206 (manufactured by Clariant Chemicals Co., Ltd.) and TINUVIN 312 (manufactured by BASF).

(Visible Light-Absorbing Colorant)

Commercially available products of visible light-absorbing dyes may be used. Organic dye compounds are preferable. Specific examples include porphyrin compounds and tetraazaporphyrin compounds. More specific examples include PD-311S (manufactured by Yamamoto Chemicals Inc.).

(Near-Infrared-Absorbing Colorant)

Examples of near-infrared-absorbing dyes include cyanine compounds, phthalocyanine compounds, naphthoquinone compounds, azo compounds, and silver nanoplates.

(Polarization Dye)

Examples of polarization dyes include anthraquinone dichroic dyes and azo dichroic dyes.

(Photochromic Dye)

The photochromic dye is not particularly limited, and any one can be selected and used from conventionally known compounds that can exhibit photochromic performance, if appropriate. For example, one or more of pyran-based compounds, oxazine-based compounds, fulgide-based compounds, fulgimide-based compounds, bisimidazole-based compounds, and the like can be used depending on desired dimming characteristics and coloring.

The photochromic dye is preferably at least one compound selected from tetraazaporphyrin-based compounds, naphthopyran-based compounds, spiropyran-based compounds, spirooxazine-based compounds, fulgide-based compounds, and bisimidazole-based compounds.

Among photochromic dyes, a compound comprising at least one polymer chain selected from a polyalkyl group, a polyether group, a polyalkyleneoxy group, a polysiloxane group, a polycaprolactone group, a polycarbonate group, a polyester group, a poly(meth)acrylate group, a poly(thio)urethane group, and a polyepoxy groups is preferable.

A photochromic dye comprising a polymer chain can be obtained by, for example, the method described in WO 2009/146509, WO 2010/20770, WO 2012/149599, or WO 2012/162725.

Examples of the photochromic dye comprising a polymer chain include the REVERSACOL series by Vivimed Labs Limited, which can be used singly, or in combination of two or more kinds thereof. It is preferable to use, as the photochromic dye comprising a polymer chain, at least one selected from REVERSACOL Trent Blue, REVERSACOL

Heath Green, REVERSACOL Chilli Red, REVERSACOL Wembley Grey, REVERSACOL Cayenne Red, REVERSACOL Peacock Blue, REVERSACOL Jalapeno Red, REVERSACOL Adriatic Blue, REVERSACOL Mendip Green, or REVERSACOL Marine Blue.

Commercially available products may be used as the functional dye. Examples thereof include: specific wavelength cut-off dyes such as PD-311S (manufactured by Yamamoto Chemicals Inc.);
and colorants such as Plast Blue 8514 (anthraquinone-based colorant manufactured by ARIMOTO CHEMICAL Co., Ltd.), Plast Red 8320 (anthraquinone-based colorant manufactured by ARIMOTO CHEMICAL Co., Ltd.), and Plast Yellow 8070 (methine-based colorant manufactured by ARIMOTO CHEMICAL Co., Ltd.).

The thickness of the polythiourethane film of the first embodiment is preferably from 100 μm to 600 μm, more preferably from 130 μm to 400 μm, still more preferably from 150 μm to 300 μm, particularly preferably from 170 μm to 250 μm.

[Use Application]

The polythiourethane film of the first embodiment can be used as an eyeglass lens, a lamp cover, a window film, or the like.

Among the above, the polythiourethane film of the first embodiment is preferably used for eyeglass lens.

<<Method of Producing Polythiourethane Film>>

The polythiourethane film of the first embodiment can be produced by a conventional method.

For example, the polythiourethane film of the first embodiment can be obtained by a casting (thin film coating-polymerization curing) method, a spin coating-polymerization curing method, a cast-molding polymerization method, or the like using a polymerizable composition containing each of the above-described components.

The casting method and spin coating-polymerization curing method are a method of obtaining a film by extruding a viscosity-adjusted polymerizable composition from a die and casting it onto a substrate or rotating a substrate on which a polymerizable composition is placed at high speed to form a thin film and then polymerizing and curing the thin film. The viscosity of the polymerizable composition during casting (coating) is selected depending on the coating method and its use application, if appropriate.

The cast-molding polymerization method is a method of obtaining a film by injecting a polymerizable composition between the faces of a mold consisting of a pair of inorganic glass, metal, or resin plates sealed on all sides and having a gap of 200 μm or less, and polymerizing the polymerizable composition. The viscosity of the polymerizable composition upon injection is selected depending on the injection method, curing process, and the like, if appropriate.

In the first embodiment, the obtained film may be annealed. Alternatively, a film may be formed by mixing fine particles of a metal oxide or the like, a filler, and the like with the polymerizable composition.

<<Eyeglass Lens Material>>

The eyeglass lens material of the first embodiment comprises the polythiourethane film of the first embodiment and a polyurethane adhesive layer attached to at least one side of the polythiourethane film.

<Polyurethane Adhesive Layer>

The polyurethane adhesive layer is an adhesive layer containing polyurethane.

It is preferable that the polyurethane adhesive layer contains a polycarbonate-based polyurethane comprising an anionic functional group.

Polyurethane can be used without particular limitations.

A commercially available polyurethane product may be used, or polyurethane may be produced from raw materials such as isocyanate, polyol, and the like.

Specific examples of polyurethane that can be used include TAKELAC WS-5100 (manufactured by Mitsui Chemicals, Inc.) and SUPERFLEX 470 (manufactured by DKS Co. Ltd.).

It is preferable that the eyeglass lens material further comprises a hard coat layer as an outermost layer.

The eyeglass lens material may comprise, for example, a hard coat layer, the polythiourethane film of the first embodiment, and a polyurethane adhesive layer in that order. For example, it may comprise a hard coat layer, a polyurethane adhesive layer, the polythiourethane film of the first embodiment, and a polyurethane adhesive layer in that order.

The components of the hard coat layer can be selected, if appropriate.

Examples of the components of the hard coat layer include a resin (e.g., urethane resin, thiourethane resin, epoxy

resin, polyester resin, melamine resin, or polyvinyl acetal resin), a hard coat agent (e.g., silane compound), a visible light absorber, and an infrared absorber.

<<Eyeglass Lens>>

The eyeglass lens of the first embodiment comprises the eyeglass lens material of the first embodiment and an eyeglass lens substrate attached to a polyurethane adhesive layer in the eyeglass lens material.

The eyeglass lens of the first embodiment may comprise the polythiourethane film of the first embodiment, a polyurethane adhesive layer attached to at least one side of the polythiourethane film, and
an eyeglass lens substrate attached to the polyurethane adhesive layer.

<Eyeglass Lens Substrate>

The eyeglass lens substrate is not particularly limited.

The eyeglass lens substrate comprises preferably at least one selected from the group consisting of polyacrylate, polyethylene terephthalate, polycarbonate, polytriacetylcellulose, polyvinyl alcohol, polyester, polyamide, polyepoxy, polyepisulfide, polyurethane, and polythiourethane,

more preferably at least one selected from the group consisting of polyepisulfide, polyurethane, and polythiourethane, and
still more preferably at least one selected from the group consisting of polyurethane and polythiourethane.

It is preferable that polyepisulfide consists of constitutional units derived from an episulfide compound or consists of constitutional units derived from an episulfide compound and constitutional units derived from a thiol compound.

It is preferable that polyurethane consists of constitutional units derived from an isocyanate compound and constitutional units derived from a polyol compound.

It is preferable that polythiourethane consists of constitutional units derived from an isocyanate compound and constitutional units derived from a thiol compound.

Examples of a method of producing the above-described polyepisulfide include a method using an episulfide compound singly or an episulfide compound and a thiol compound.

Examples of a method of producing polyurethane include a method using an isocyanate compound and a polyol compound.

Examples of a method of producing polythiourethane include a method using the above-described polyisocyanate and polythiol compounds.

(Episulfide Compound)

Examples of the episulfide compound include an epithioethylthio compound, a linear aliphatic 2,3-epithiopropylthio compound, a cyclic aliphatic 2,3-epithiopropylthio compound, an aromatic 2,3-epithiopropylthio compound, a linear aliphatic 2,3-epithiopropyloxy compound, a cyclic aliphatic2,3-epithiopropyloxy compound, and an aromatic 2,3-epithiopropyloxy compound, which are used singly, or in a mixture of two or more kinds thereof.

Examples of the episulfide compound include compounds exemplified in WO2015/137401.

From the viewpoint of improving the solubility of the functional dye in the resin, the episulfide compound is preferably at least one selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane, more preferably bis(2,3-epithiopropyl)disulfide.

(Thiol Compound)

Specific examples, preferred specific examples, preferred aspects, and the like of the thiol compound are the same as those described in the above (thiol compound) section.

(Isocyanate Compound)

Specific examples, preferred specific examples, preferred aspects, and the like of the isocyanate compound are the same as those described in the above (isocyanate compound) section.

(Polyol Compound)

The alcohol compound is at least one type of aliphatic or alicyclic alcohol. Specific examples thereof include linear or branched aliphatic alcohol, alicyclic alcohol, and alcohols made by adding ethylene oxide, propylene oxide, and ε-caprolactone to these alcohols. Specifically, compounds exemplified in WO2016/125736 can be used.
It is preferable that the polyol compound is at least one selected from the group consisting of ethylene glycol, diethylene glycol, triethylene glycol, propylene glycol, 1,3-propanediol, 1,2-cyclopentanediol, 1,3-cyclopentanediol, 1,2-cyclohexanediol, 1,3-cyclohexanediol, and 1,4-cyclohexanediol.
It is preferable that an eyeglass lens substrate has a convex or concave surface attached to a polyurethane adhesive layer of an eyeglass lens material in the eyeglass lens of the first embodiment.
The polythiourethane film of the first embodiment can be attached to the eyeglass lens substrate via the polyurethane adhesive layer.
In general, as the curvature radius of the convex or concave surface curve is smaller, the lens curve sharply increases, making it difficult to attach the polythiourethane film to the eyeglass lens substrate. The polythiourethane film of the first embodiment also has excellent adhesion in a case in which it is applied to an eyeglass lens substrate with a small curvature radius.
The eyeglass lens substrate may have a convex or concave surface with a small curvature radius in the eyeglass lens of the first embodiment.
For example, the curvature radius of the eyeglass lens substrate is preferably from 62.5 mm to 125.0 mm, more preferably from 70.0 mm to 100.0 mm, and still more preferably from 75.0 mm to 90.0 mm.
The polythiourethane film of the first embodiment also has excellent curved surface conformability and adhesion in a case in which it is applied to an eyeglass lens substrate with the above-described curvature radius.
The eyeglass lens of the first embodiment may comprise two or more sheets of an eyeglass lens material.

<Coating Layer>

The eyeglass lens of the first embodiment may comprise a coating layer.
Specific examples of a coating layer include a hard coat layer, an antireflection layer, an antifogging coat layer, an antifouling layer, and a water repellent layer.
Each of these coating layers can be used singly, or a plurality of coating layers can be used as a multilayer. In a case in which a coating layer is applied to both sides, the same coating layer or a different coating layer may be applied to each side.
When coating treatment is performed, a treatment using a solvent may be performed before applying a coating composition to the film. Such treatments include wiping a surface to which a lens coating composition is applied using an organic solvent, etching the surface to be applied with an alkaline aqueous solution, and immersing the lens in a coating solution containing a solvent.
At this time, in a case in which the film has poor solvent resistance, the film is damaged by the solvent, and a coating layer cannot be layered, if appropriate.
Since the polythiourethane film of the first embodiment has excellent solvent resistance, even when treated with a solvent such as an organic solvent or an alkaline aqueous solution, a coating layer can be layered favorably.
As a result, in the eyeglass lens of the first embodiment, a coating layer can be directly layered on the polythiourethane film of the first embodiment without using any other layer.

(Hard Coat Layer)

It is preferable that the eyeglass lens of the first embodiment comprises a hard coat layer.
A hard coat layer is a coating layer intended to impart functions such as scratch resistance, abrasion resistance, moisture resistance, warm water resistance, heat resistance, and weather resistance to the lens surface.
To form the hard coat layer, a hard coat composition comprising an organosilicon compound having hardenability and one or more types of oxide fine particles containing an element selected from the element group of Si, Al, Sn, Sb, Ta, Ce, La, Fe, Zn, W, Zr, In, and Ti may be used.
A hard coat composition comprising an organosilicon compound having hardenability and one or more types of complex oxide fine particles containing two or more elements selected from the element group of Si, Al, Sn, Sb, Ta, Ce, La, Fe, Zn, W, Zr, In, and Ti may also be used.
It is preferable that the hard coat composition comprises at least one selected from the group consisting of amines, amino acids, metal acetylacetonate complexes, organic acid metal salts, perchloric acids, salts of perchloric acids, acids, metal chlorides, and polyfunctional epoxy compounds in addition to the above-described components.
The hard coat composition may contain a solvent that does not affect the lens substrate or may contain no

solvent.

A hard coat layer is usually formed by applying a hard coat composition using a known coating method such as spin coating or dip coating, then curing it. Examples of curing methods include irradiation with energy rays such as ultraviolet rays and visible light and heat curing. From the viewpoint of suppressing the occurrence of interference fringes, the difference in the refractive index of the hard coat layer and that of the lens substrate is within preferably ±0.1. When forming a hard coat layer, a hard coat composition can be applied to the surface of a polythiourethane film using a bar coater, a blade coater, or the like, and after being cured, it can be bonded to a lens substrate. Alternatively, a polythiourethane film may be bonded to a lens substrate in advance, and then a hard coat composition may be applied by spin coating, dip coating, or the like.

(Antireflection Layer)

It is preferable that the eyeglass lens of the first embodiment comprises an antireflection layer.

There are inorganic and organic antireflection layers.

An inorganic antireflection layer is formed using inorganic oxides such as $SiO_2$ and $TiO_2$ by a dry method such as vacuum evaporation, sputtering, ion plating, ion beam assist, or CVD.

An organic antireflection layer is formed by a wet process using a composition containing an organosilicon compound and fine silica particles with internal cavities.

If necessary, the antireflection layer may be formed on top of the hard coat layer.

The antireflection layer may be a multilayer or single layer.

From the viewpoint of effectively expressing the antireflection function, the antireflection layer is preferably multilayered. In that case, it is preferable to alternately layer low refractive index layers and high refractive index layers. Further, the difference in refractive index between the low refractive index layer and the high refractive index layer is preferably 0.1 or more.

Examples of the high refractive index layer include layers of ZnO, $TiO_2$, $CeO_2$, $Sb_2O_5$, $SnO_2$, $ZrO_2$, $Ta_2O_5$, and the like, and examples of the low refractive index layer include layers of $SiO_2$.

When the antireflection layer is used as a single layer, the refractive index is preferably at least 0.1 lower than the refractive index of the hard coat layer.

An anti-fog coating layer, an antifouling layer, a water-repellent layer, or the like may be formed on the antireflection layer as necessary. The method of forming an anti-fog layer, an anti-contamination layer, a water-repellent layer, or the like is not particularly limited, and conventionally known methods can be applied.

It is preferable that the eyeglass lens of the first embodiment comprises a hard coat layer or an antireflection layer.

Specifically, for example, it is preferable that the eyeglass lens of the first embodiment comprises a hard coat layer or an antireflection layer, and at least part of the hard coat layer or antireflection layer is in contact with a polythiourethane film.

<<Method of Producing Eyeglass Lens>>

The method of producing an eyeglass lens of the first embodiment is a method of producing the eyeglass lens of the first embodiment.

The method of producing an eyeglass lens of the first embodiment comprises a step of bonding the eyeglass lens material of the first embodiment to an eyeglass lens substrate, thereby obtaining an eyeglass lens (also referred to as the "bonding step").

It is preferable that the method of producing an eyeglass lens of the first embodiment comprises a step of bonding the eyeglass lens material to an eyeglass lens substrate using a vacuum-pressure forming machine, thereby obtaining an eyeglass lens.

It is more preferable that the method of producing an eyeglass lens of the first embodiment comprises a step of heating the eyeglass lens material of the first embodiment to allow its surface temperature to reach from 80°C to 150°C, thereby bonding a polyurethane adhesive layer of the eyeglass lens material to an eyeglass lens substrate under reduced pressure of 10 kPa or less.

<Bonding Step>

It is preferable that the bonding step is a step of heating the eyeglass lens material of the first embodiment to allow its surface temperature to reach from 80°C to 150°C, thereby bonding a polyurethane adhesive layer of the eyeglass lens material to an eyeglass lens substrate under reduced pressure of 10 kPa or less.

The bonding step will be explained in detail below.

[Bonding Using Vacuum-Pressure Forming Machine]

It is preferable to perform the bonding step using a vacuum-pressure forming machine.
Bonding using a vacuum-pressure forming machine will be explained with reference to FIG. 1.
FIG. 1 is a diagram for explaining bonding using a vacuum-pressure forming machine.
First, a substrate 3 is placed on a lower substrate stage. A film 2 is placed on a film stage. At that time, the film 2 is placed such that the adhesive layer is on the substrate side.
Next, the film 2 is heated to a predetermined temperature using a heater 1. Also, the pressure is reduced in an upper film chamber and a lower mold chamber. The lower mold chamber is in a vacuum state 4.
After heating the film 2 to a predetermined temperature, the upper film chamber side is returned to normal pressure to pressurize the film 2.
After that, the substrate stage is raised to perform stage rising 5, and the lower mold chamber is continued to be depressurized while a substrate 3 hits the film 2. In addition, compressed air 6 is sent into the upper film chamber for pressurization. This state is maintained for from 3 seconds to 30 seconds.
Next, the upper film chamber and lower mold chamber are returned to normal pressure, and the substrate (i.e., lens) to which the film is bonded is removed.
Trimming 7 is performed on an unnecessary portion of the film, and bonding is completed by further heating.
Examples of vacuum-pressure forming machines include the NGF series (manufactured by Fu-se Vacuum Forming Ltd.) and the TFH series (manufactured by ASANO LAB.).
As the method of producing an eyeglass lens of the first embodiment, the production method described in Japanese Patent No. 5417452 can be referred to and adopted, if appropriate.
The first embodiment also encompasses the following embodiments.

<1A> A polythiourethane film comprising polythiourethane having a molecular weight between crosslinking points of from 950 to 3000.
<2A> The polythiourethane film according to <1A>, wherein the polythiourethane is a reaction product of a bifunctional thiol compound, a trifunctional or higher thiol compound, and an isocyanate compound.
<3A> The polythiourethane film according to <1A> or <2A>, wherein the bifunctional thiol compound has a thiol equivalent of from 20% to 95% with respect to a total thiol equivalent of 100% for the bifunctional thiol compound and the trifunctional or higher thiol compound.
<4A> The polythiourethane film according to any one of <1A> to <3A>, further comprising a functional dye.
<5A> The polythiourethane film according to any one of <1A> to <4A>, which has a minimum storage modulus at from 30°C to 160°C, wherein the minimum storage modulus is from $3.00 \times 10^6$ Pa to $1.40 \times 10^7$ Pa.
<6A> The polythiourethane film according to any one of <1A> to <5A>, which has a thickness of from 100 μm to 600 μm.
<7> An eyeglass lens material comprising the polythiourethane film according to any one of <1A> to <6A> and a polyurethane adhesive layer that is attached to at least one side of the polythiourethane film.
<8A> An eyeglass lens, comprising the eyeglass lens material according to <7A> and an eyeglass lens substrate attached to the polyurethane adhesive layer in the eyeglass lens material.
<9A> The eyeglass lens according to <8A>, wherein the eyeglass lens substrate has a convex or concave surface attached to the polyurethane adhesive layer in the eyeglass lens material.
<10A> The eyeglass lens according to <8A> or <9A>, wherein the eyeglass lens substrate has a curvature radius of from 62.5 mm to 125.0 mm.
<11A> The eyeglass lens according to any one of <8A> to <10A>, which comprises two or more sheets of the eyeglass lens material.
<12A> The eyeglass lens according to any one of <8A> to <11A>, wherein the eyeglass lens substrate comprises at least one selected from the group consisting of polyacrylate, polyethylene terephthalate, polycarbonate, polytriacetylcellulose, polyvinyl alcohol, polyester, polyamide, polyepoxy, polyepisulfide, polyurethane, and polythiourethane.
<13A> The eyeglass lens according to any one of <8A> to <12A>, comprising a hard coat layer or an antireflection layer, wherein at least part of the hard coat layer or the antireflection layer is in contact with the polythiourethane film.

(Second Embodiment)

<<Method of Producing Eyeglass Lens>>

The method of producing an eyeglass lens of the second embodiment comprises a step of forming a polycarbonate-based polyurethane adhesive layer consisting of a dry matter of a polyurethane aqueous dispersion comprising

a polycarbonate-based polyurethane having an anionic functional group on at least one side of a functional resin layer containing a functional dye, thereby obtaining a layered body (also referred to as the "layered body production step" in the second embodiment), and

a step of heating the layered body at from 50°C to 150°C and bonding it to a lens substrate under reduced pressure of 20 kPa or less in a direction such that the polycarbonate-based polyurethane adhesive layer is in contact with the lens substrate, thereby obtaining an eyeglass lens (also referred to as the "eyeglass lens production step" in the second embodiment),
wherein the dry matter of the polyurethane aqueous dispersion has a storage modulus of from 0.1 MPa to 80 MPa at 80°C measured under the following Condition 1.

[Condition 1]

The storage modulus at 80°C is measured at a frequency of 1 Hz, with strain control, under tensile conditions while increasing the temperature from -102°C to 80°C at a rate of 3°C/min by a dynamic viscoelasticity measuring device using a test piece having a length of 3 cm, a width of 5 mm, and a thickness of 500 μm, consisting of a dry matter of a polyurethane aqueous dispersion.
As a structure of a functional lens, a structure in which a functional resin layer (e.g., a film) containing a functional dye such as a photochromic compound is bonded to a lens substrate is known.
A functional lens having the above-described structure requires the film to conform to the shape of the lens substrate. For example, when bonding the film to the lens substrate via the adhesive layer, the film comprising the adhesive layer is sometimes heated to expand. In such a case, the adhesive layer is required to expand like the film while conforming to the lens substrate shape to be in tight contact with the lens substrate
In addition, the functional lens having the above-described structure is also required to have alkali resistance.
It is conceivable to form a layer such as a hard coat layer on the film in the functional lens having the above-described structure. At that time, treatment with an organic solvent, an alkaline aqueous solution, or the like is often performed, and the adhesive layer is often damaged by the alkaline aqueous solution.
The second embodiment of the disclosure can provide; a method of producing an eyeglass lens, whereby an eyeglass lens comprising a polycarbonate-based polyurethane adhesive layer having excellent adhesion to a lens substrate and alkali resistance; a layered body; and an eyeglass lens.

<Layered body Production Step>

The layered body production step in the second embodiment is a step of forming a polycarbonate-based polyurethane adhesive layer consisting of a dry matter of a polyurethane aqueous dispersion comprising a polycarbonate-based polyurethane having an anionic functional group on at least one side of a functional resin layer containing a functional dye, thereby obtaining a layered body.
In the method of producing an eyeglass lens of the second embodiment, the layered body can be obtained by forming a polycarbonate-based polyurethane adhesive layer consisting of a dry matter of a polyurethane aqueous dispersion comprising a polycarbonate-based polyurethane having an anionic functional group on at least one side of a functional resin layer containing a functional dye.
In the method of producing an eyeglass lens of the second embodiment, the layered body may comprise a functional resin layer containing a functional dye and a polycarbonate-based polyurethane adhesive layer layered to at least one side of the functional resin layer.
Before applying a polyurethane aqueous dispersion to a functional resin layer, the surface of a functional resin layer to which a polyurethane aqueous dispersion is applied may be pretreated.
The pretreatment method is not particularly limited, and it may be selected as appropriate from the viewpoint of adhesion, for example. Examples of the pretreatment method include etching treatment with an alkaline aqueous solution, etching treatment with an alkaline surfactant aqueous solution, cleaning treatment with a surfactant aqueous solution, cleaning treatment with pure water, etching treatment using UV ozone, etching treatment by plasma, etching treatment by corona discharge, polishing treatment using fine particles, and polishing treatment.
When performing etching treatment using pure water or an aqueous solution, chemical treatment can be performed more effectively by combining heating, ultrasonic irradiation, and the like.
Among the above, the pretreatment method is preferably etching treatment by plasma or corona discharge.
A known application method can be applied without particular limitations as a method of applying a polyurethane aqueous dispersion. For example, the polyurethane aqueous dispersion may be applied by spin coating, dip coating, die coating, spray coating, curtain (flow) coating, bar coating, roll coating using a knife or gravure coater, or the like.
The temperature for drying the polyurethane aqueous dispersion is preferably from 40°C to 130°C, more

preferably from 45°C to 110°C, still more preferably from 50°C to 100°C.

[Functional Resin Layer]

The functional resin layer contains a functional dye.

The functional resin layer contains a functional dye and thus has functions such as cutting specific wavelengths (e.g., ultraviolet rays, visible light, and near-infrared rays), photochromic properties, and polarizing properties.

The functional resin layer has a thickness of preferably from 10 μm to 700 μm, more preferably from 13 μm to 600 μm, still more preferably from 15 μm to 400 μm, and particularly preferably from 20 μm to 300 μm.

(Functional Dye)

Examples of the functional dye include dyes that block specific wavelengths (e.g., ultraviolet rays, visible light, and near-infrared rays), photochromic dyes (e.g., naphthopyran compounds), and dichroic dyes.

It is preferable that the functional dye comprises at least one selected from the group consisting of a UV absorber, a visible light-absorbing dye, a photochromic dye, and a dichroic dye.

(UV Absorber)

The UV absorber may be a dye that absorbs only UV rays or a dye that absorbs UV rays and blue light (so-called blue light).

Specific examples of the UV absorber include benzotriazole-based UV absorbers, triazine-based UV absorbers, benzophenone-based UV absorbers, cyanoacrylate-based UV absorbers, diphenyl acrylate-based UV absorbers, phenolic UV absorbers, malonic acid ester-based UV absorbers, and oxanilide-based UV absorbers.

Among the above, the UV absorber contains preferably at least one selected from the group consisting of benzotriazole-based UV absorbers, triazine-based UV absorbers, and benzophenone-based UV absorbers.

Specific examples of benzotriazole-based UV absorbers include 2-(2'-hydroxy-5'-t-octylphenyl)benzotriazole and 2-(3-tert-butyl-2-hydroxy-5-methylphenyl)-5-chlorobenzotriazole.

Commercially available products of benzotriazole-based UV absorbers can include the VIOSORB series (manufactured by KYODO CHEMICAL COMPANY LIMITED), TINUVIN the series (manufactured by BASF), and the SEESORB series (manufactured by SHIPRO KASEI KAISHA, LTD.).

Specific examples of triazine-based UV absorbers include 2-(4-phenoxy-2-hydroxyphenyl)-4,6-diphenyl-1,3,5-triazine. Commercially available products of triazine-based UV absorbers can include the TINUVIN series (manufactured by BASF), the ADK STAB series (manufactured by ADEKA CORPORATION), and the EVERSORB series (Everlight Chemical Industrial Corp).

Specific examples of benzophenone-based UV absorbers include 2-hydroxy-4-methoxybenzophenone, 2-hydroxy-4-n-octoxybenzophenone, 2,2',4,4'-tetrahydroxybenzophenone, and 2,2'-dihydroxy-4,4'-dimethoxybenzophenone.

Commercially available benzophenone-based UV absorbers include the TINUVIN series (manufactured by BASF), the SEESORB series (manufactured by SHIPRO KASEI KAISHA, LTD.), and the EVERSORB series (Everlight Chemical Industrial Corp).

Specific examples of malonic acid ester-based UV absorbers include p-phenylene bis(methylenemalonic acid) tetraethyl ester and dimethyl p-methoxybenzylidene malonate.

Examples of commercially available products of malonic acid ester-based UV absorbers include HOSTAVIN PR-25 and HOSTAVIN B-CAP (manufactured by Clariant Chemicals Co., Ltd.).

Specific examples of oxanilide-based UV absorbers include 2-ethyl-2'-ethoxy-oxanilide and 2-isododecyl-2'-ethoxyoxanilide.

Examples of commercially available products of oxanilide-based UV absorbers include the trade names of HOSTAVIN VSU and HOSTAVIN 3206 (manufactured by Clariant Chemicals Co., Ltd.) and TINUVIN 312 (manufactured by BASF).

(Visible Light-Absorbing Colorant)

Examples of the visible light-absorbing dye include porphyrin-based dyes, tetraazaporphyrin-based dyes, phthalocyanine-based dyes, merocyanine-based dyes, anthraquinone-based dyes, methine-based dyes, and azo-based dyes.

As the visible light-absorbing dye, porphyrin-based dyes, tetraazaporphyrin-based dyes, phthalocyanine-base dyes, and anthraquinone-based dyes are preferable.

Visible light-absorbing dyes may be used singly, or in combination of two or more kinds thereof.
Commercially available products of porphyrin-based dyes include UVY-0026 (manufactured by Yamamoto Chemicals Inc.; maximum absorption wavelength: 449 nm) and UVY-1023 (manufactured by Yamamoto Chemicals Inc.; maximum absorption wavelength: 479 nm).
Commercially available products of tetraazaporphyrin-based dyes include PD-311S (manufactured by Yamamoto Chemicals Inc.; maximum absorption wavelength: 585 nm).
Commercially available products of anthraquinone dyes include the PLAST COLOR series (manufactured by ARIMOTO CHEMICAL Co., Ltd.).
Commercially available products of methine dyes include the PLAST COLOR series (manufactured by ARIMOTO CHEMICAL Co., Ltd.).

(Near-Infrared-Absorbing Dye)

Examples of the near-infrared absorbing dye include phthalocyanine-based dyes, squarylium-based dyes, diimonium-based dyes, dithiolene complex-based dyes, and cyanine-based dyes.

(Photochromic Dye)

The photochromic dye is not particularly limited, and any one can be selected and used from conventionally known compounds that can exhibit photochromic performance, as appropriate. For example, one or more of pyran-based compounds, oxazine-based compounds, fulgide-based compounds, fulgimide-based compounds, bisimidazole-based compounds, and the like can be used depending on desired dimming characteristics and coloring.
The photochromic dye is preferably at least one compound selected from spiropyran-based compounds, spirooxazine-based compounds, fulgide-based compounds, and bisimidazole-based compounds.
Among photochromic dyes, a compound comprising at least one polymer chain selected from a polyalkyl group, a polyether group, a polyalkyleneoxy group, a polysiloxane group, a polycaprolactone group, a polycarbonate group, a polyester group, a poly(meth)acrylate group, a poly(thio)urethane group, and a polyepoxy groups is preferable.
A photochromic dye comprising a polymer chain can be obtained by, for example, the method described in WO 2009/146509, WO 2010/20770, WO 2012/149599, or WO 2012/162725.
Examples of the photochromic dye comprising a polymer chain include the REVERSACOL series by Vivimed Labs Limited, which can be used singly, or in combination of two or more kinds thereof. It is preferable to use, as the photochromic dye comprising a polymer chain, at least one selected from REVERSACOL Trent Blue, REVERSACOL Heath Green, REVERSACOL Chilli Red, REVERSACOL Wembley Grey, REVERSACOL Cayenne Red, REVERSACOL Peacock Blue, REVERSACOL Jalapeno Red, REVERSACOL Adriatic Blue, REVERSACOL Mendip Green, or REVERSACOL Marine Blue.

(Dichroic Dye)

Examples of the dichroic dye include iodine, azo dyes, anthraquinone dyes, and dioxazine dyes.

(Resin)

The functional resin layer may comprise a resin as a base material.
Examples of a resin include a thermoplastic resin and a thermosetting resin.

(Thermoplastic Resin)

Examples of the thermoplastic resin include, but are not particularly limited to, polyacrylate, polyethylene terephthalate, polycarbonate, polytriacetylcellulose, polyvinyl alcohol, polyester, polyamide, and polyurethane.
Among the above, preferred thermoplastic resins are polyacrylate, polyethylene terephthalate, and polyacetyl cellulose.
The thermoplastic resin has a softening temperature of preferably from 50°C to 150°C, more preferably from 55°C to 140°C, and still more preferably from 60°C to 130°C.
For example, the functional resin layer may comprise a thermoplastic resin having a softening temperature of from 50°C to 150°C.
The softening temperature is obtained as the temperature at which the tan $\delta$ curve shows a maximum value in measurement using a dynamic viscoelasticity measuring device.

(Thermosetting Resin)

The thermosetting resin is not particularly limited; however, it preferably comprises at least one selected from the group consisting of polyepoxy, polyepisulfide, and poly(thio)urethane.
The functional resin layer may be a commercially available product or produced by curing a polymerizable composition.
Commercially available products include the ACRYPLEN (polyacrylate manufactured by Mitsubishi Chemical Group Corporation).
The functional resin layer may be a single layer or multilayer. **In** a case in which the functional resin layer is a multilayer, it may consist of a single type of resin or multiple types of resin. **In** a case in which the functional resin layer is a multilayer, layers may be bonded by an adhesive or the like.
The functional resin layer can be produced by an ordinary method.
For example, the functional resin layer can be formed by a casting (thin film coating-solvent evaporation) method, a casting (extrusion molding-cooling) method, a stretching method, a thin film coating-polymerization curing method, a cast-mold polymerization method, or the like using the above-described components.
The functional dye may be included in the functional resin layer by adding a functional dye to a resin in advance to form a functional resin layer or by adding a dye by solvent dyeing, sublimation dyeing, coating, or the like after obtaining a resin layer, thereby obtaining a functional resin layer.
The casting (thin film coating-solvent evaporation) method is a method in which a solution of a resin dissolved in a solvent is poured into a sheet, and then the solvent is evaporated to obtain a film.
The casting (extrusion molding-cooling) method is a method in which a molten resin is discharged into a film through a T-die attached to the tip of an extruder and then cooled with a cooling roll to obtain a film.
The stretching method is a method in which a molten resin is discharged into a film through a T-die attached to the tip of an extruder and then stretched to obtain a film.
The thin film coating-polymerization curing method is a method in which a polymerizable composition applied in the form of a thin film is polymerized and cured to obtain a film. Polymerization curing is performed by irradiation with ultraviolet light or heating. The substrate on which the thin film is applied may be a mold release film.
The cast-molding polymerization method is a method in which a polymerizable composition is cast between a cavity consisting of a plate-shaped mold and a spacer, and after the polymerizable composition is polymerized and cured, it is released from the mold to obtain a film. Polymerization curing is performed by irradiation with ultraviolet light or heating.
In the second embodiment, the obtained film may be annealed. The functional resin layer may contain fine particles of a metal oxide or the like, a filler, and the like.

<Functional Resin Layer Production Step>

It is preferable that the method of producing an eyeglass lens of the second embodiment comprises a functional resin layer production step before a layered body production step.
The functional resin layer production step in the second embodiment is a step of applying a polymerizable composition comprising a functional dye to a mold release film and then curing it, thereby obtaining a functional resin layer, which is provided before the step of obtaining a layered body.
Specifically, the functional resin layer production step may be performed by, for example, the following method.
After applying a polymerizable composition comprising a functional dye to a mold release film, it is thermally cured or photocured, thereby forming a functional resin layer.
Any known application method can be applied without particular limitations as a method of applying the polymerizable composition to the mold release film. For example, the polymerizable composition may be applied by spin coating, dip coating, die coating, spray coating, curtain (flow) coating, bar coating, roll coating using a knife or gravure coater, or the like.
When photocuring the polymerizable composition, it is desirable to use light including light with a wavelength of from 200 nm to 450 nm.
In the case of photocuring the polymerizable composition, a light source such as sunlight, a chemical lamp, a mercury lamp, a metal halide lamp, or a UV LED can be used. If necessary, a specific wavelength cut-off filter, a heat ray cut-off filter, or a wavelength cut-off filter that suppresses ozone generation may be used, or a coating agent may be cooled or heated during ultraviolet irradiation.
An example of the ultraviolet irradiation conditions is that the irradiation intensity is from 0.1 mW/cm$^2$ to 1,000 mW/cm$^2$, the cumulative light amount is from 10 mJ/cm$^2$ to 5,000 mJ/cm$^2$, and the irradiation time is from 0.1 seconds to 500 seconds.
In the case of thermally curing the polymerizable composition, heating may be performed at a constant temperature, or heating and cooling may be performed by combining heating, raising the temperature, cooling, and

lowering the temperature at a predetermined temperature for a predetermined time using a temperature controller or a polymerization furnace that can control the temperature based on a temperature program. Heating may be performed at a temperature of from 10°C to 300°C for from 0.1 hour to 80 hours.

Examples of the material for the mold release film include polyolefins such as polyethylene terephthalate and polypropylene, and polycarbonate.

The thickness of the mold release film is preferably from 10 μm to 250 μm, more preferably from 15 μm to 200 μm, still more preferably from 20 μm to 150 μm.

[Polycarbonate-Based Polyurethane Adhesive Layer]

The polycarbonate-based polyurethane adhesive layer is a dry matter of a polyurethane aqueous dispersion comprising a polycarbonate-based polyurethane having an anionic functional group.

In other words, the polycarbonate-based polyurethane adhesive layer comprises a polycarbonate-based polyurethane having an anionic functional group.

The polycarbonate-based polyurethane adhesive layer may further comprise additives such as inorganic nanoparticles, a leveling agent, a UV absorber, a silane coupling agent, and a plasticizer.

The content of additives may be 30% by mass or less, preferably 20% by mass or less, with respect to the total mass of the polycarbonate-based polyurethane adhesive layer.

[Mass Increase Rate in Warm Water Resistance Test]

The mass increase rate in the warm water resistance test measured under the following Condition 3 is preferably from 1% to 50% for the polycarbonate-based polyurethane adhesive layer.

[Condition 3]

A test piece having a length of 4 cm, a width of 2 cm, and a thickness of 500 μm, consisting of a dry matter of a polyurethane aqueous dispersion comprising polycarbonate-based polyurethane, is immersed in warm water at 40°C for 24 hours, and the mass of the test piece before and after immersion is measured. The mass increase rate in the warm water resistance test is calculated from the following formula using the mass of the test piece before and after immersion.

Mass increase rate = ((Mass of test piece after immersion - Mass of test piece before immersion)/(Mass of test piece before immersion)) × 100

The unit of mass increase rate is %.

The alkali resistance is excellent when the mass increase rate in the warm water resistance test is 50% or less.

From the above-described viewpoint, the mass increase rate in the warm water resistance test is more preferably 40% or less, still more preferably 20% or less.

The adhesion to the lens substrate is excellent as the mass increase rate in the warm water resistance test is 1% or more.

From the above-described viewpoint, the mass increase rate in the warm water resistance test is more preferably 3% or more, still more preferably 5% or more.

The mass increase rate in the warm water resistance test is measured by, for example, the following method.

A polyurethane aqueous dispersion is applied to a PET film and heat-dried in an electric furnace set to 80°C, thereby obtaining a dry matter of the polyurethane aqueous dispersion. Heat drying is performed until the mass change of the dry matter of the polyurethane aqueous dispersion becomes less than 1%/hour. The initial mass of a test piece (thickness: 500 μm; length: 4 cm; width: 2 cm) of the dry matter of the polyurethane aqueous dispersion peeled from the PET film is measured. Next, the mass of the resultant test piece is measured after immersion in warm water at 40°C for 24 hours. The formula is as follows:

Mass increase rate = ((Mass of test piece after immersion - Mass of test piece before immersion)/(Mass of test piece before immersion)) × 100.

The thickness of the polycarbonate-based polyurethane adhesive layer is preferably from 1 μm to 100 μm, more preferably from 2 μm to 70 μm, still more preferably from 3 μm to 50 μm, particularly preferably from 4 μm to 20 μm.

(Polyurethane Aqueous Dispersion)

The polyurethane aqueous dispersion comprises a polycarbonate-based polyurethane having an anionic functional group and water.

The polyurethane aqueous dispersion may further comprise inorganic nanoparticles, a leveling agent, a UV absorber, a silane coupling agent, a plasticizer, a solvent, and the like.

(Polycarbonate-Based Polyurethane)

The polycarbonate-based polyurethane has an anionic functional group.

Examples of an anionic functional group include a carboxy group, a sulfonic acid group, a phosphoric acid group, and a betaine structure-containing group such as sulfobetaine. Among the above, the anionic functional group preferably contains a carboxy group.

The polycarbonate-based polyurethane preferably comprises a non-yellowing type of isocyanate as a constituent raw urethane material. The non-yellowing type of isocyanate is an isocyanate that does not have an aromatic skeleton and preferably has an aliphatic or alicyclic skeleton.

The polycarbonate-based polyurethane comprises a non-yellowing type of isocyanate such that it can suppress yellowing during heating and has excellent light resistance.

[Storage Modulus]

The dry matter of the polyurethane aqueous dispersion has a storage modulus of from 0.1 MPa to 80 MPa at 80°C measured under the following Condition 1.

[Condition 1]

The storage modulus at 80°C is measured at a frequency of 1 Hz, with strain control, under tensile conditions while increasing the temperature from -102°C to 80°C at a rate of 3°C/min by a dynamic viscoelasticity measuring device using a test piece having a length of 3 cm, a width of 5 mm, and a thickness of 500 μm, consisting of a dry matter of a polyurethane aqueous dispersion.

As the storage modulus is 0.1 MPa or more, it is possible to prevent the dry matter of the polyurethane aqueous dispersion from becoming excessively liquefied, resulting in excellent adhesion.

From the above-described viewpoint, the storage modulus is preferably 0.5 MPa or more, more preferably 0.7 MPa or more, and still more preferably 1.0 MPa or more.

As the storage modulus is 80 MPa or less, it is possible to prevent the dry matter of the polyurethane aqueous dispersion from becoming excessively solidified, resulting in excellent adhesion.

From the above-described viewpoint, the storage modulus is preferably 70 MPa or less, more preferably 50 MPa or less, and still more preferably 30 MPa or less.

(Storage Modulus Measurement)

The viscoelasticity of the dry matter of the polyurethane aqueous dispersion is measured using a dynamic viscoelasticity measuring device (e.g., DMA8000 manufactured by PerkinElmer).

A polyurethane aqueous dispersion is applied to a PET film and heat-dried in an electric furnace set to 80°C, thereby obtaining a dry matter of the polyurethane aqueous dispersion. Heat drying is performed until the mass change of the dry matter of the polyurethane aqueous dispersion becomes less than 1%/hour. A test piece (3 cm × 5 mm, 500 μm thick in size) consisting of the dry matter of the polyurethane aqueous dispersion peeled from PET film is prepared.

A test piece 3 cm × 5 mm, 500 μm thick in size is prepared from the dry matter of the polyurethane aqueous dispersion. Measurement is performed at a frequency of 1.0 Hz, with strain control, under tensile conditions while increasing the temperature from -102°C to 80°C at a temperature increase rate of 3°C/min.

The above-described test piece consisting of the dry matter of the polyurethane aqueous dispersion may be produced from, for example, a polyurethane aqueous dispersion.

In addition, the above-described test piece consisting of the dry matter of the polyurethane aqueous dispersion may further comprise additives such as inorganic nanoparticles, a leveling agent, a UV absorber, a silane coupling agent, and a plasticizer, in addition to polycarbonate-based polyurethane. The content of additives may be 30% by mass or less, preferably 20% by mass or less, with respect to the total mass of the polycarbonate-based polyurethane adhesive layer.

[Outflow Start Temperature]

The dry matter of the polyurethane aqueous dispersion preferably has an outflow start temperature of from 160°C to 220°C as measured under the following Condition 2.

[Condition 2]

The outflow start temperature is measured using a flow tester. The polycarbonate-based polyurethane is placed in a test vessel containing an orifice having an inner diameter of 1 mm and a length of 1 mm at the end. The temperature is raised at a temperature increase rate of 3°C/min under a load of 10 $kgf/cm^2$. The temperature at which the dry matter of the polyurethane aqueous dispersion begins to flow out from the orifice is determined to be the outflow start temperature.
The unit of outflow start temperature is °C.
The outflow start temperature tends to depend on the flow properties of the polymer upon heating.
As the outflow start temperature is 160°C or more, the heat resistance is excellent.
From the above-described viewpoint, the outflow start temperature is more preferably 165°C or more.
As the outflow start temperature is 220°C or less, the adhesion to the lens substrate is excellent.
From the above-described viewpoint, the outflow start temperature is preferably 210°C or less, more preferably 200°C or less.
The outflow start temperature is measured by, for example, the following method.
A polyurethane aqueous dispersion is applied to a PET film and heat-dried in an electric furnace set to 80°C, thereby obtaining a dry matter of the polyurethane aqueous dispersion. Heat drying is performed until the mass change of the dry matter of the polyurethane aqueous dispersion becomes less than 1%/hour. The dry matter of the polyurethane aqueous dispersion peeled off from the PET film is placed in a test vessel containing an orifice (inner diameter :1 mm; length: 1 mm) at the end using a Flow Tester CFT-500D manufactured by SHIMADZU CORPORATION. The temperature is raised at a temperature increase rate of 3°C/min under a load of 10 $kgf/cm^2$, and the temperature (°C) at which the dry matter of the polyurethane aqueous dispersion begins to flow out from the orifice is measured.
The dry matter of the polyurethane aqueous dispersion has a glass transition temperature of preferably from -45°C to 0°C.
As the glass transition temperature is -45°C or more, the dry matter of the polyurethane aqueous dispersion has excellent heat resistance.
From the above-described viewpoint, the glass transition temperature is preferably - 35°C or more, more preferably -25°C or more, particularly preferably -20°C or more.
As the glass transition temperature is 0°C or more, the dry matter of the polyurethane aqueous dispersion has excellent adhesion.
From the above-described viewpoint, the glass transition temperature is preferably - 3°C or less, more preferably -5°C or less.
The glass transition temperature is measured using a dynamic viscoelasticity measuring device (e.g., DMA 8000 manufactured by PerkinElmer).
Specifically, a polyurethane aqueous dispersion is applied to a PET film and heat-dried in an electric furnace set to 80°C, thereby obtaining a dry matter of the polyurethane aqueous dispersion. Heat drying is performed until the mass decrease of the dry matter of the polyurethane aqueous dispersion becomes less than 1% per hour.
The polycarbonate-based polyurethane is peeled off from the PET film. Then, the glass transition temperature of the dry matter of the polyurethane aqueous dispersion is measured using a dynamic viscoelasticity measuring device (DMA 8000 manufactured by PerkinElmer). The glass transition temperature is the temperature at which the tan $\delta$ graph shows a maximum value. When maximum values are present at multiple temperatures, the lower temperature is defined as the glass transition temperature.
The polycarbonate-based polyurethane is not particularly limited as long as it has an anionic functional group.
The polycarbonate-based polyurethane may be a commercially available product or produced by synthesizing raw materials.
Examples of commercially available products of the polyurethane aqueous dispersion include SUPERFLEX 470 (manufactured by DKS Co. Ltd.), EVAFANOL HA-170 (manufactured by NICCA CHEMICAL CO., LTD.), the TAKELAC series (manufactured by Mitsui Chemicals, Inc.), and the HYDRAN series (manufactured by DIC Corporation). SUPERFLEX 470 and EVAFANOL HA-170 are preferable commercially available products.
The content of the polycarbonate-based polyurethane having an anionic functional group is preferably from 10% by mass to 50% by mass, more preferably from 15% by mass to 45% by mass, still more preferably from 20% by mass to 40% by mass with respect to the total mass of the polyurethane aqueous dispersion.
The particle size of polyurethane particles contained in the polyurethane aqueous dispersion is preferably from 5 nm to 100 nm, more preferably from 10 nm to 80 nm, and still more preferably from 15 nm to 50 nm from the viewpoint of

improving adhesive layer transparency.

The particle size of polyurethane particles contained in the polyurethane aqueous dispersion is measured by dynamic light scattering.

(Water)

The polyurethane aqueous dispersion comprises water.

The content of water is not particularly limited. For example, it is preferably from 40% by mass to 90% by mass, more preferably from 50% by mass to 75% by mass, and still more preferably from 60% by mass to 80% by mass with respect to the total mass of the polyurethane aqueous dispersion.

<Eyeglass Lens Production Step>

The eyeglass lens production step in the second embodiment is a step of heating a layered body at from 50°C to 150°C and bonding it to a lens substrate under reduced pressure below 20 kPa in a direction such that the polycarbonate-based polyurethane adhesive layer is in contact with the lens substrate, thereby obtaining an eyeglass lens.

The eyeglass lens production step will be explained in detail below.

It is preferable to perform the eyeglass lens production step by bonding a layered body to a lens substrate using a vacuum forming machine, a pressure forming machine, or a vacuum-pressure forming machine. The layered body may be heated using an infrared heater, a ceramic heater, hot air, steam, or the like.

When bonding the layered body to the lens substrate, air, compressed air, a silicone pad, a rubber pad, or the like may be used.

[Bonding Using Vacuum-Pressure Forming Machine]

Bonding of the polycarbonate-based polyurethane adhesive layer to the lens substrate using a vacuum-pressure forming machine will be described with reference to FIG. 1.

FIG. 1 is a diagram for explaining bonding using a vacuum-pressure forming machine.

First, a substrate 3 is placed on a lower substrate stage. A film 2 is placed on a film stage. At that time, the film 2 is placed such that the adhesive layer is on the substrate side.

Next, the film 2 is heated to a predetermined temperature using a heater 1. Also, the pressure is reduced in an upper film chamber and a lower mold chamber. The lower mold chamber is in a vacuum state 4.

After heating the film 2 to a predetermined temperature, the upper film chamber side is returned to normal pressure to pressurize the film 2.

After that, the substrate stage is raised to perform stage rising 5, and the lower mold chamber is continued to be depressurized while a substrate 3 hits the film 2. In addition, compressed air 6 is sent into the upper film chamber for pressurization. This state is maintained for a few seconds.

Next, the upper film chamber and lower mold chamber are returned to normal pressure, and the substrate (i.e., lens) to which the film is bonded is removed.

Trimming 7 is performed on an unnecessary portion of the film, and bonding is completed by further heating.

Examples of vacuum-pressure forming machines include the NGF series (manufactured by Fu-se Vacuum Forming Ltd.) and the TFH series (manufactured by ASANO LAB.).

(Eyeglass Lens)

The eyeglass lens is obtained by heating the layered body at from 50°C to 150°C and bonding it to the lens substrate under reduced pressure of 20 kPa or less in a direction such that the polycarbonate-based polyurethane adhesive layer is in contact with the lens substrate.

In other words, the eyeglass lens comprises the layered body in the second embodiment and the lens substrate attached to the polycarbonate-based polyurethane adhesive layer in the above-described layered body.

The eyeglass lens may comprise a functional resin layer containing a functional dye, a polycarbonate-based polyurethane adhesive layer layered to at least one side of the functional resin layer, and a lens substrate attached to the polycarbonate-based polyurethane adhesive layer.

<Lens Substrate>

The lens substrate is not particularly limited.

The lens substrate comprises preferably at least one selected from the group consisting of polyacrylate,

polyethylene terephthalate, polycarbonate, polyamide, polyepoxy, polyepisulfide, polyurethane, and polythiourethane,

more preferably at least one selected from the group consisting of polyepisulfide, polyurethane, and polythiourethane, still more preferably at least one selected from the group consisting of polyurethane and polythiourethane.

It is preferable that polyepisulfide consists of constitutional units derived from an episulfide compound or consists of constitutional units derived from an episulfide compound and constitutional units derived from a thiol compound.
It is preferable that polyurethane consists of constitutional units derived from an isocyanate compound and constitutional units derived from an alcohol compound.
It is preferable that polythiourethane consists of constitutional units derived from an isocyanate compound and constitutional units derived from a thiol compound.
Examples of a method of producing the above-described polyepisulfide include a method using an episulfide compound singly or an episulfide compound and a thiol compound.
Examples of a method of producing polyurethane include a method using an isocyanate compound and an alcohol compound.
Examples of a method of producing polythiourethane include a method using the above-described isocyanate and thiol compounds.

(Episulfide Compound)

Examples of the episulfide compound include an epithioethylthio compound, a linear aliphatic 2,3-epithiopropylthio compound, a cyclic aliphatic 2,3-epithiopropylthio compound, an aromatic 2,3-epithiopropylthio compound, a linear aliphatic 2,3-epithiopropyloxy compound, a cyclic aliphatic 2,3-epithiopropyloxy compound, and an aromatic 2,3-epithiopropyloxy compound, which are used singly, or in a mixture of two or more kinds thereof.
Examples of the episulfide compound include compounds exemplified in WO2015/137401.
The episulfide compound is preferably at least one selected from the group consisting of bis(2,3-epithiopropyl) sulfide, bis(2,3-epithiopropyl)disulfide, bis(1,2-epithioethyl)sulfide, bis(1,2-epithioethyl)disulfide, and bis(2,3-epithiopropylthio)methane, and is more preferably bis(2,3-epithiopropyl)disulfide.

(Isocyanate Compound)

The isocyanate compound may be a linear isocyanate compound or a cyclic isocyanate compound.
Examples of the isocyanate compound include an aliphatic isocyanate compound, an alicyclic isocyanate compound, an aromatic isocyanate compound, a heterocyclic isocyanate compound, and an aromatic and aliphatic isocyanate compound, which are used singly, or in a mixture of two or more kinds thereof. These isocyanate compounds may include dimers, trimers, prepolymers, and the like.
Examples of the isocyanate compound include compounds exemplified in WO2011/055540.
Among the above, an aliphatic isocyanate compound is preferably at least one selected from the group consisting of pentamethylene diisocyanate, hexamethylene diisocyanate, bis(isocyanatocyclohexyl)methane, 2,5-bis(isocyanatomethyl)bicyclo-[2.2.1]-heptane, and 2,6-bis(isocyanatomethyl)bicyclo-[2.2.1]-heptane.
Among the above, an aromatic isocyanate compound is preferably at least one selected from the group consisting of xylylene diisocyanate, tolylene diisocyanate, 4,4'-diphenylmethane diisocyanate, and phenylene diisocyanate.

(Thiol Compound)

Examples of the thiol compound include a polythiol compound having two or more mercapto groups and a hydroxythiol compound having one or more mercapto groups and one or more hydroxyl groups, which are used singly, or in a mixture of two or more kinds thereof. Examples of these thiol compounds include compounds exemplified in WO2016/125736.

(Bifunctional Thiol Compound)

Examples of the bifunctional thiol compound include: methanedithiol, 1,3-propanedithiol, 1,2-ethanedithiol, 1,2-cyclohexane dithiol, bis(2-mercaptoethyl)ether, diethylene glycol bis(2-mercaptoacetate), diethylene glycol bis(3-mercaptopropionate), ethylene glycol bis(2-mercaptoacetate), ethylene glycol bis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane,

1,2-bis(mercaptomethylthio)ethane, 1,2-bis(2-mercaptoethylthio)ethane, 1,2-bis(3-mercaptopropylthio)ethane, 2,5-dimercaptomethyl-1,4-dithiane, 2,5-dimercapto-1,4-dithiane, 2,5-dimercaptomethyl-2,5-dimethyl-1,4-dithiane, and thioglycolic acid esters and mercaptopropionic acid esters thereof;

aliphatic polythiol compounds such as bis(2-mercaptoethyl)sulfide, hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), and 4,6-bis(mercaptomethylthio)-1,3-dithiane;
aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 2,5-toluenedithiol, 3,4-toluenedithiol, 1,5-naphthalenedithiol, and 2,6-naphthalenedithiol; and
heterocyclic polythiol compounds such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane.

Among the above, more preferably, at least one selected from the group consisting of bis(mercaptoethyl)sulfide, 1,3-propanedithiol, 2,5-dimercaptomethyl-1,4-dithiane, and 4,6-bis(mercaptomethylthio)-1,3-dithiane is contained as a bifunctional thiol compound.

(Trifunctional or Higher Thiol Compound)

Examples of the trifunctional or higher thiol compound include: 1,2,3-propanetrithiol, tetrakis(mercaptomethyl)methane, trimethylol propanetris(2-mercaptoacetate), trimethylol propanetris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, and thioglycolic acid esters and mercaptopropionic acid esters thereof;

aliphatic polythiol compounds such as 1,1,3,3-tetrakis(mercaptomethylthio)propane, 1,1,2,2-tetrakis(mercaptomethylthio)ethane, tris(mercaptomethylthio)methane, and tris(mercaptoethylthio)methane;
aromatic polythiol compounds such as 1,3,5-trimercaptobenzene, 1,3,5-tris(mercaptomethyl)benzene, 1,3,5-tris(mercaptomethyleneoxy)benzene, and 1,3,5-tris(mercaptoethyleneoxy)benzene; and
heterocyclic polythiol compounds such as 2,4,6-trimercapto-s-triazine, 2,4,6-trimercapto-1,3,5-triazine, and 2-(2,2-bis(mercaptomethylthio)ethyl)-1,3-dithietane.

It is preferable that at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(2-mercaptoacetate), pentaerythritol tetrakis(3-mercaptopropionate), 1,1,3,3-tetrakis(mercaptomethylthio)propane, and 2-(2,2-bis(mercaptomethylthio)ethyl)-1,3-dithietane is contained as a trifunctional or higher thiol compound.
The equivalent ratio of the thiol group in the thiol compound to the isocyanato group in the isocyanate compound (thiol group/isocyanato group) is preferably from 0.8 to 1.2, more preferably from 0.85 to 1.15, and still more preferably from 0.9 to 1.1.
Within the above-described range, polythiourethane can be obtained, which is suitable for use as an optical material, especially as a plastic lens material for eyeglasses.

(Polyol Compound)

The alcohol compound is at least one type of aliphatic or alicyclic alcohol. Specific examples thereof include linear or branched aliphatic alcohol, alicyclic alcohol, and alcohols made by adding ethylene oxide, propylene oxide, and ε-caprolactone to these alcohols. Specifically, compounds exemplified in WO2016/125736 can be used.
It is preferable that the polyol compound is at least one selected from the group consisting of ethylene glycol,

diethylene glycol, triethylene glycol, propylene glycol, 1,3-propanediol, 1,2-cyclopentanediol, 1,3-cyclopentanediol, 1,2-cyclohexanediol, 1,3-cyclohexanediol, and 1,4-cyclohexanediol.

Before bonding the functional resin layer to the lens substrate, pretreatment may be applied to the lens surface to which the functional resin layer is bonded.

The pretreatment method is not particularly limited, and it may be selected as appropriate from the viewpoint of adhesion, for example. Examples of the pretreatment method include etching treatment with an alkaline aqueous solution, etching treatment with an alkaline surfactant aqueous solution, cleaning treatment with a surfactant aqueous solution, cleaning treatment with pure water, etching treatment using UV ozone, etching treatment using plasma, polishing treatment using fine particles, and polishing treatment.

When performing etching treatment using pure water or an aqueous solution, chemical treatment can be performed more effectively by combining heating, ultrasonic irradiation, and the like.

It is preferable that the method of producing an eyeglass lens of the second embodiment further comprises a step of forming a coating layer on at least the surface of the functional resin layer in the eyeglass lens.

It is more preferable that the method of producing an eyeglass lens of the second embodiment further comprises a step of forming a hard coat layer on at least the surface of the functional resin layer in the eyeglass lens.

[Coating Layer]

Specific examples of a coating layer include a hard coat layer, an antireflection layer, an antifogging coat layer, an antifouling layer, and a water repellent layer.

Each of these coating layers can be used singly, or a plurality of coating layers can be used as a multilayer. In a case in which a coating layer is applied to both sides, the same coating layer or a different coating layer may be applied to each side.

(Hard Coat Layer)

It is preferable that the eyeglass lens of the second embodiment comprises a hard coat layer.

A hard coat layer is a coating layer intended to impart functions such as scratch resistance, abrasion resistance, moisture resistance, warm water resistance, heat resistance, and weather resistance to the lens surface.

To form the hard coat layer, a hard coat composition comprising an organosilicon compound having hardenability and one or more types of oxide fine particles containing an element selected from the element group of Si, Al, Sn, Sb, Ta, Ce, La, Fe, Zn, W, Zr, In, and Ti may be used.

A hard coat composition comprising an organosilicon compound having hardenability and one or more types of complex oxide fine particles containing two or more elements selected from the element group of Si, Al, Sn, Sb, Ta, Ce, La, Fe, Zn, W, Zr, In, and Ti may also be used.

It is preferable that the hard coat composition comprises at least one selected from the group consisting of amines, amino acids, metal acetylacetonate complexes, organic acid metal salts, perchloric acids, salts of perchloric acids, acids, metal chlorides, and polyfunctional epoxy compounds in addition to the above-described components.

The hard coat composition may contain a solvent that does not affect the lens substrate or may contain no solvent.

A hard coat layer is usually formed by applying a hard coat composition using a known coating method such as spin coating or dip coating, then curing it. Examples of curing methods include irradiation with energy rays such as ultraviolet rays and visible light and heat curing. From the viewpoint of suppressing the occurrence of interference fringes, the difference in the refractive index of the hard coat layer and that of the lens substrate is within, preferably, $\pm 0.1$.

Before applying a hard coat agent, the surface to which the hard coat agent is applied may be pretreated.

Examples of the pretreatment method include etching treatment with an alkaline aqueous solution, etching treatment with an alkaline surfactant aqueous solution, cleaning treatment with a surfactant aqueous solution, cleaning treatment with pure water, etching treatment using UV ozone, etching treatment using plasma, polishing treatment using fine particles, and polishing treatment.

When performing etching treatment using pure water or an aqueous solution, chemical treatment can be performed more effectively by combining heating, ultrasonic irradiation, and the like.

(Antireflection Layer)

It is preferable that the eyeglass lens of the second embodiment comprises an antireflection layer.

There are inorganic and organic antireflection layers.

An inorganic antireflection layer is formed using inorganic oxides such as $SiO_2$ and $TiO_2$ by a dry method such as vacuum evaporation, sputtering, ion plating, ion beam assist, or CVD.

An organic antireflection layer is formed by a wet process using a composition containing an organosilicon compound and fine silica particles with internal cavities.

If necessary, the antireflection layer may be formed on top of the hard coat layer.

The antireflection layer may be a multilayer or single layer.

From the viewpoint of effectively expressing the antireflection function, the antireflection layer is preferably multilayered. In that case, it is preferable to alternately layer low refractive index layers and high refractive index layers. Further, the difference in refractive index between the low refractive index layer and the high refractive index layer is preferably 0.1 or more.

Examples of the high refractive index layer include layers of ZnO, $TiO_2$, $CeO_2$, $Sb_2O_5$, $SnO_2$, $ZrO_2$, $Ta_2O_5$, and the like, and examples of the low refractive index layer include layers of $SiO_2$.

When the antireflection layer is used as a single layer, the refractive index is preferably at least 0.1 lower than the refractive index of the hard coat layer.

An anti-fog coating layer, an antifouling layer, a water-repellent layer, or the like may be formed on the antireflection layer as necessary. The method of forming an anti-fog layer, an anti-contamination layer, a water-repellent layer, or the like is not particularly limited, and conventionally known methods can be applied.

<Reheating Step>

It is preferable that the method of producing an eyeglass lens of the second embodiment further comprises a reheating step of reheating the eyeglass lens at from 50°C to 150°C.

Reheating is performed at preferably from 90°C to 140°C, more preferably from 100°C to 130°C.

<<Layered body>>

The layered body of the second embodiment comprises a polycarbonate-based polyurethane adhesive layer consisting of a dry matter of a polyurethane aqueous dispersion comprising a polycarbonate-based polyurethane having an anionic functional group and a functional resin layer containing a functional dye,

wherein the dry matter of the polyurethane aqueous dispersion has a storage modulus of from 0.1 MPa to 80 MPa at 80°C measured under the following Condition 1.

[Condition 1]

The storage modulus at 80°C is measured at a frequency of 1 Hz, with strain control, under tensile conditions while increasing the temperature from -102°C to 80°C at a rate of 3°C/min by a dynamic viscoelasticity measuring device using a test piece having a length of 3 cm, a width of 5 mm, and a thickness of 500 μm, consisting of a dry matter of a polyurethane aqueous dispersion.

The layered body of the second embodiment may be a layered body produced in the layered body production step in the second embodiment.

Regarding the dry matter of the polyurethane aqueous dispersion, polycarbonate-based polyurethane adhesive layer, functional dye, functional resin layer, and storage modulus at 80°C measured under Condition 1, details of specific examples, preferred specific examples, specific embodiments, preferred embodiments, measurement methods, and the like are as described above.

The mass increase rate in a warm water resistance test measured under the following Condition 3 is preferably from 1% to 50% for the dry matter of the polyurethane aqueous dispersion.

[Condition 3]

A test piece having a length of 4 cm, a width of 2 cm, and a thickness of 500 μm, consisting of a dry matter of a polyurethane aqueous dispersion, is immersed in warm water at 40°C for 24 hours, and the mass of the test piece before and after immersion is measured. The mass increase rate in the warm water resistance test is calculated from the following formula using the mass of the test piece before and after immersion.

Mass increase rate = ((Mass of test piece after immersion - Mass of test piece before immersion)/(Mass of test piece before immersion)) × 100

Regarding the mass increase rate in the warm water resistance test, the details of the specific aspect, preferred range, and the like are described above.

<<Eyeglass Lens>>

The eyeglass lens of the second embodiment comprises the layered body of the second embodiment and a lens substrate attached to a polycarbonate-based polyurethane adhesive layer in the layered body.

The eyeglass lens of the second embodiment may be an eyeglass lens produced by the method of producing an eyeglass lens of the second embodiment.

Regarding the lens substrate, the details of the specific aspect, preferred aspect, and the like are described above.

The second embodiment also encompasses the following embodiments. <1B> A method of producing an eyeglass lens, comprising a step of forming a polycarbonate-based polyurethane adhesive layer consisting of a dry matter of a polyurethane aqueous dispersion comprising a polycarbonate-based polyurethane having an anionic functional group on at least one side of a functional resin layer containing a functional dye, thereby obtaining a layered body, and a step of heating the layered body at from 50°C to 150°C and bonding it to a lens substrate under reduced pressure of 20 kPa or less in a direction such that the polycarbonate-based polyurethane adhesive layer is in contact with the lens substrate, thereby obtaining an eyeglass lens, wherein the dry matter of the polyurethane aqueous dispersion has a storage modulus of from 0.1 MPa to 80 MPa at 80°C measured under the following Condition 1.

[Condition 1]

The storage modulus at 80°C is measured at a frequency of 1 Hz, with strain control, under tensile conditions while increasing the temperature from -102°C to 80°C at a rate of 3°C/min by a dynamic viscoelasticity measuring device using a test piece having a length of 3 cm, a width of 5 mm, and a thickness of 500 μm, consisting of the dry matter of the polyurethane aqueous dispersion.

<2B> The method of producing an eyeglass lens according to <1B>, wherein the dry matter of the polyurethane aqueous dispersion preferably has an outflow start temperature of from 160°C to 220°C as measured under the following Condition 2.

[Condition 2]

The outflow start temperature is measured using a flow tester. The dry matter of the polyurethane aqueous dispersion is placed in a test vessel containing an orifice having an inner diameter of 1 mm and a length of 1 mm at the end. The temperature is raised at a temperature increase rate of 3°C/min under a load of 10 kgf/$cm^2$. The temperature at which the dry matter of the polyurethane aqueous dispersion begins to flow out from the orifice is determined to be the outflow start temperature.

<3B> The method of producing an eyeglass lens according to <1B> or <2B>, further comprising a step of forming a hard coat layer on at least the surface of the functional resin layer in the eyeglass lens.

<4B> The method of producing an eyeglass lens according to any one of <1B> to <3B>, wherein the mass increase rate in a warm water resistance test measured under the following Condition 3 is from 1% to 50% for the dry matter of the polyurethane aqueous dispersion.

[Condition 3]

The test piece having a length of 4 cm, a width of 2 cm, and a thickness of 500 μm, consisting of a dry matter of a polyurethane aqueous dispersion, is immersed in warm water at 40°C for 24 hours, and the mass of the test piece before and after immersion is measured. The mass increase rate in the warm water resistance test is calculated from the following formula using the mass of the test piece before and after immersion.

Mass increase rate = ((Mass of test piece after immersion - Mass of test piece before immersion)/(Mass of test piece before immersion)) × 100

<5B> The method of producing an eyeglass lens according to any one of <1B> to <4B>, wherein the polycarbonate-based polyurethane adhesive layer has a thickness of from 1 μm to 100 μm

<6B> The method of producing an eyeglass lens according to any one of <1B> to <5B>, wherein the dry matter of the polyurethane aqueous dispersion has a glass transition temperature of from -45°C to 0°C.

<7B> The method of producing an eyeglass lens according to any one of <1B> to <6B>, wherein the functional resin layer has a thickness of from 10 μm to 700 μm.

<8B> The method of producing an eyeglass lens according to any one of <1B> to <7B>, wherein the functional

resin layer comprises a thermoplastic resin having a softening temperature of from 50°C to 150°C.

<9B> The method of producing an eyeglass lens according to any one of <1B> to <7B>, wherein the functional resin layer comprises a thermosetting resin comprising at least one selected from the group consisting of polyepoxy, polyepisulfide, and poly(thio)urethane.

<10B> The method of producing an eyeglass lens according to any one of <1B> to <9B>, comprising a step of applying the polymerizable composition comprising the functional dye to a mold release film and then curing it, thereby obtaining the functional resin layer, which is provided before the step of obtaining the layered body.

<11B> The method of producing an eyeglass lens according to any one of <1B> to <10B>, wherein the functional dye comprises at least one selected from the group consisting of a UV absorber, a visible light-absorbing dye, a photochromic dye, and a dichroic dye.

<12B> A layered body, comprising a polycarbonate-based polyurethane adhesive layer consisting of a dry matter of a polyurethane aqueous dispersion comprising a polycarbonate-based polyurethane having an anionic functional group and a functional resin layer containing a functional dye, wherein the dry matter of the polyurethane aqueous dispersion has a storage modulus of from 0.1 MPa to 80 MPa at 80°C measured under the following Condition 1.

[Condition 1]

The storage modulus at 80°C is measured at a frequency of 1 Hz, with strain control, under tensile conditions while increasing the temperature from -102°C to 80°C at a rate of 3°C/min by a dynamic viscoelasticity measuring device using a test piece having a length of 3 cm, a width of 5 mm, and a thickness of 500 μm, consisting of a dry matter of a polyurethane aqueous dispersion.

<13B> The layered body according to <12B>, wherein the mass increase rate in a warm water resistance test measured under the following Condition 3 is from 1% to 50% for the dry matter of the polyurethane aqueous dispersion.

[Condition 3]

The test piece having a length of 4 cm, a width of 2 cm, and a thickness of 500 μm, consisting of a dry matter of a polyurethane aqueous dispersion, is immersed in warm water at 40°C for 24 hours, and the mass of the test piece before and after immersion is measured. The mass increase rate in the warm water resistance test is calculated from the following formula using the mass of the test piece before and after immersion.

Mass increase rate = ((Mass of test piece after immersion - Mass of test piece before immersion)/(Mass of test piece before immersion)) × 100

<14B> The layered body according to <12B> or <13B>, comprising at least one selected from a UV absorber, a visible light-absorbing dye, a photochromic dye, or a dichroic dye as the functional dye.

<15B> An eyeglass lens, comprising the layered body according to any one of <12B> to <14B> and the lens substrate attached to the polycarbonate-based polyurethane adhesive layer in the layered body.

## EXAMPLES

Hereinafter, embodiments according to the first embodiment will be described in detail with reference to Examples. Note that the invention of the first embodiment is in no way limited to the description of these Examples.

In the Examples, details of each component used are as follows.

- Specific wavelength cut-off dye
  PD-311S manufactured by Yamamoto Chemicals Inc.
- Colorant

    Plast Blue 8514 anthraquinone-based colorant manufactured by ARIMOTO CHEMICAL Co., Ltd.
    Plast Red 8320 anthraquinone-based colorant manufactured by ARIMOTO CHEMICAL Co., Ltd.
    Plast Yellow 8070 methine-based colorant manufactured by ARIMOTO CHEMICAL Co., Ltd.

- Urethane primer

    Urethane primer 1: TAKELAC WS-5100 (manufactured by Mitsui Chemicals, Inc.)
    Urethane primer 2: SUPERFLEX 470 (manufactured by DKS Co. Ltd.)

Urethane primer 3: EVAFANOL HA-170 (manufactured by NICCA CHEMICAL CO., LTD.)

- Isocyanate compound

Isocyanate 1: Mixture of 2,5-bis(isocyanatomethyl)bicyclo-[2.2.1]-heptane and 2,6-bis(isocyanatomethyl)bicyclo-[2.2.1]-heptane
Isocyanate 2: Hexamethylene diisocyanate
Isocyanate 3: Meta-xylylene diisocyanate

- Thiol compound

Thiol 1: 4-mercaptomethyl-1,8-dimercapto-3,6-dithiaoctane
Thiol 2: Bis(2-mercaptoethyl)sulfide
Thiol 3: Pentaerythritol tetrakis(3-mercaptopropionate)

[Evaluation Method]

In Examples, films and lenses were each evaluated as follows.

(Measurement of Film Thickness)

The thickness of each film was measured using a thickness gauge. Specifically, a digital gauge (DIGIMICRO ME-50HA, manufactured by NIKON CORPORATION) was used to measure arbitrary points on the film.

(Measurement of Softening Temperature and Elastic Modulus of Film Resin)

The softening temperature and elastic modulus of the film resin were measured using the method described in the above section (Measurement of Softening Temperature and Storage Modulus).

(Calculation of Molecular Weight between Crosslinking Points of Film Resin)

The molecular weight between crosslinking points of film resin was measured using the method described in the above section (Method of Measuring Molecular Weight between Crosslinking Points).

(Film Conformability)

The conformability of the film to the substrate was visually confirmed and evaluated for the lens to which the film was bonded.

Rank 1: The film did not adhere to the curved surface of the substrate, or bubbles were confirmed between the substrate and the film.
Rank 2: The film adhered to the curved surface of the substrate, and no air bubbles were confirmed between the substrate and film.

(Film Tear)

It was visually confirmed whether or not the film was torn.

(Adhesion Test)

A cutter was used to draw 11 vertical and 11 horizontal lines at 1 mm intervals on the periphery of the convex surface of the lens, thereby creating 100 squares in a grid pattern. Cellophane tape manufactured by NICHIBAN Co., Ltd. was applied over the 100 squares, and the tape was peeled off vertically to check the peeling state of the film or coating film.
Adhesion was evaluated by visually checking the number of squares where no peeling occurred among 100 squares.
Table 1 shows the number of squares where no peeling occurred out of 100 squares.
When no peeling occurred, the tape was applied again, and the same method was used to peel it off twice.
In a case in which the above-described adhesion test was performed on a lens with a hard coat layer layered on

top of the film, resulting in peeling, it means that the film has poor solvent resistance.

In other words, when the film is damaged by the solvent used in the hard coat treatment, the film and the hard coat layer cannot be brought into sufficient contact with each other, resulting in the peeling described above.

(Scratch Resistance Test)

The scratches, which were made by using #0000 Steel Wool, placing a 1-kg weight directly above the lens, applying a load, and creating a reciprocating motion ten times on the surface of the coated film, were visually evaluated and ranked in five stages. The evaluation criteria are as follows.

Evaluation criteria

Rank 1: The entire width of the steel wool was scratched, and the coating film was wholly peeled off.
Rank 2: Deep scratches were present across the entire width of the steel wool, but the coating film remained.
Rank 3: Several to dozens of thick scratches were present.
Rank 4: Several to dozens of thin scratches were present.
Rank 5: There were almost no visible scratches.

(Cloudiness)

It was visually confirmed whether cloudiness had occurred in the coated lenses.

Note that cloudiness occurs when the film surface is eroded and damaged by the solvent in [Hard Coat Treatment]. In other words, the occurrence of cloudiness means that the solvent resistance of the film is poor.

(Heat Resistance Test)

The film or lens was placed on a tray and heated for 10 minutes in an electric furnace at a constant temperature of 60°C. The lenses immediately after being taken out of the electric furnace and after the temperature was sufficiently cooled to around room temperature were observed to confirm the generation of cracks.

In a case in which no cracks were generated, the temperature of the electric furnace was further increased by 10°C, and the same evaluation was performed. The same operation was repeated until cracks were generated, and the maximum temperature at which no cracks were generated was defined as the heat resistance temperature, which was used as an index of heat resistance.

(Transmittance Measurement)

The transmittance of the film or lens was measured using a UV-Vis spectrophotometer (manufactured by SHIMADZU CORPORATION). The measurement wavelength was set to a range of from 350 nm to 800 nm, and the effect of the functional dye absorbing a specific wavelength was confirmed from the obtained transmittance spectrum.

<Preparation of Lens Substrate>

A mixed solution was prepared by charging 0.03 parts by mass of dimethyltin dichloride, 0.1 parts by mass of ZELEC UN manufactured by Stepan Company, 50.6 parts by mass of a mixture of 2,5-bis(isocyanatomethyl)bicyclo-[2.2.1]-heptane and 2,6-bis(isocyanatomethyl)bicyclo-[2.2.1]-heptane, and 0.05 parts by mass of 2-(2-hydroxy-5-tert-octylphenyl)benzotriazole as a UV absorber. This mixed solution was stirred at 25°C for 1 hour to dissolve completely. Thereafter, this mixed liquid was charged with 25.5 parts by mass of a thiol composition comprising 4-mercaptomethyl-1,8-dimercapto-3,6-dithiaoctane and 23.9 parts by mass of a thiol composition comprising pentaerythritol tetrakis(3-mercaptopropionate), which was then stirred at 25°C for 30 minutes, thereby obtaining a homogeneous solution (polymerizable composition). This polymerizable composition was defoamed at 600 Pa for 1 hour and filtered through a 1-μm PTFE filter, thereby obtaining a mixed liquid.

Next, to mold a lens with high curvature on the convex side, casting molds that were fixed with tape such that the front glass mold (R of the concave surface facing the back glass mold was 86 mm) and the back glass mold (R of the convex surface facing the front glass mold was 250 mm) were facing each other was created. The gap between the outermost peripheries of the molds was set to about 1 mm. The mixed liquid was poured into the gap formed with these molds and the tape, followed by a temperature increase from 25°C to 120°C over 16 hours. The resultant was cooled to room temperature

and removed from the glass molds, thereby obtaining a lens having a diameter of 81 mm. This lens was processed to have a diameter of 75 mm, and a lens substrate having a dioptric power of +4.50 and a refractive index of 1.597 was obtained.

Separately from the above, to mold a lens with high curvature on the concave side, casting molds that were fixed with tape such that the front glass mold (R of the concave surface facing the back glass mold was 253 mm) and the back glass mold (R of the convex surface facing the front glass mold was 86 mm) were facing each other was created. The mixed liquid was poured into the gap between the molds (distance at the approximate center of the circle: 1.5 mm), followed by a temperature increase from 25°C to 120°C over 16 hours. The resultant was cooled to room temperature and removed from the glass molds, thereby obtaining a lens having a diameter of 81 mm. This lens was processed to have a diameter of 75 mm, and a lens substrate having a dioptric power of -4.50 and a refractive index of 1.597 was obtained.

(Example 1A)

[Preparation of Polythiourethane Film]

A mixed solution was prepared by charging 0.04 parts by mass of dimethyltin dichloride, 0.2 parts by mass of ZELEC UN manufactured by Stepan Company, 0.007 parts by mass of PD-311S manufactured by Yamamoto Chemicals Inc. as a dye, 31.9 parts by mass of a mixture of 2,5-bis(isocyanatomethyl)bicyclo-[2.2.1]-heptane and 2,6-bis(isocyanatomethyl)bicyclo-[2.2.1]-heptane, 17.3 parts by mass of hexamethylene diisocyanate, and 0.05 parts by mass of 2-(2-hydroxy-5-tert-octylphenyl)benzotriazole as a UV absorber. This mixed solution was stirred at 25°C for 1 hour to dissolve completely. Thereafter, this mixed liquid was charged with 26.8 parts by mass of a thiol composition comprising 4-mercaptomethyl-1,8-dimercapto-3,6-dithiaoctane and 15.9 parts by mass of bis(2-mercaptoethyl)sulfide, which was then stirred at 25°C for 30 minutes, thereby obtaining a homogeneous solution (polymerizable composition). This polymerizable composition was defoamed at 600 Pa for 1 hour and filtered through a 1-μm PTFE filter, thereby obtaining a mixed liquid.

Two glass plates having a length of 36 cm, a width of 27 cm, and a thickness of 5 mm were allowed to sandwich a PTFE sheet having a thickness of 200 μm. The sheet was processed so as to wrap around the four sides of the glass plates with a width of 1.5 cm. The pair of glass plates were fixed with tape so as to cover their peripheries, thereby combining film-forming molds. The mixed liquid was injected into the gap between the film-forming molds, the casting opening was closed with tape, and the temperature was raised from 30°C to 120°C over 12 hours. The molded product was cooled to room temperature and removed from the glass molds, thereby obtaining an A4-size polythiourethane film having the corresponding thickness listed in Table 1.

Two flat glass plates, each having a diameter of 80 mm, were separately prepared and fixed with tape so as to face each other, thereby creating casting molds. The mixed liquid was poured into the gap between molds (distance at the approximate center of the circle: 2.5 mm), followed by a temperature increase from 25°C to 120°C over 16 hours. Thereafter, it was cooled to room temperature and removed from the glass molds, thereby obtaining a flat polythiourethane plate having a diameter of 80 mm. A portion of the resultant flat plate was cut, thereby obtaining a test piece having a size of 30 mm × 5 mm and a thickness of 2.5 mm for use in measuring softening temperature and elastic modulus.

When the elastic modulus of the resultant test piece was measured, the approximate line between temperature and elastic modulus had a slope of 10,000 or more upward to the right in a range of from 130°C to 150°C.

Table 1 shows the results.

[Application of Adhesive Layer]

After wiping the obtained film with acetone, a urethane primer 1 was applied as an adhesive layer for bonding the substrate and the film.

The urethane primer 1 was dropped onto the film with a dropper and coated with a gap coater. After coating, the film with the primer was placed in an electric furnace set at 70°C and dried for 15 minutes. Next, a protective film was bonded to the surface coated with this urethane primer and stored as a bonding film.

[Bonding Using Vacuum-Pressure Forming Machine]

The lens was wiped with Silbon paper impregnated with acetone, then immersed in a caustic soda bath at a liquid temperature of 55°C and a concentration of 10% for 5 minutes while being ultrasonicated. Next, the lens was cleaned by rinsing in a pure water bath for 15 minutes while being ultrasonicated and then dried with warm air at 70°C, thereby preparing a substrate.

Next, the cleaned lens was placed on the substrate stage of a vacuum-pressure forming machine NGF-0404-T (manufactured by Fu-se Vacuum Forming Ltd.). An A4-size polythiourethane film coated with the adhesive layer was placed on the film stage. At that time, the protective film was peeled off and the polythiourethane film was placed such that

the adhesive layer was on the substrate side.

Next, the vacuum chamber in which the film and substrate were placed was sealed, and the pressure was reduced to 3 kPa using a vacuum pump. At this time, the upper film chamber, which is the upper space with the film in between, and the lower mold chamber, which is the space in which the lower substrate is placed, were separated by the film, and the pressure in both the upper and lower spaces was reduced.

The film was heated from above with a heater until the surface temperature reached the corresponding temperature listed in Table 1. After the film reached 145°C, some air was introduced into the upper film chamber to increase the pressure, causing the film to expand slightly toward the substrate below. In this state, the substrate stage was raised from below toward the film; thus, the substrate surface and the film surface were bonded together. After bonding, compressed air was sent to the upper film chamber to create a pressurized state of 300 kPa while the lower mold chamber remained under reduced pressure, and the state was maintained for about 5 seconds. Thereafter, the spaces above and below the film were returned to normal pressure, the sealed state was released, and the lens with the film bonded thereto was collected.

The film adhered to the lens, conforming to the curved surface of the lens, and no air bubbles were observed between the substrate and the film.

Next, the film was cut out circumferentially along the outer periphery of the lens, and the lens portion to which the film was bonded was separated from the remaining film portion.

Then, the lens to which the film was bonded was heated in an electric furnace at 120°C for 1 hour to completely cure the primer, thereby obtaining a film-covered lens with a film wholly attached to the substrate surface.

[Hard Coat Treatment]

The resultant film-covered lens was wiped with Silbon paper impregnated with acetone as a solvent and immersed in a caustic soda bath at a temperature of 55°C and a concentration of 10% for 5 minutes while being ultrasonicated.

Next, the lens was cleaned by rinsing in a pure water bath for 15 minutes while being ultrasonicated and then dried with warm air at 70°C. This lens was immersed in a hard coat liquid Crystal Coat IM-9060 (manufactured by SDC Technologies) for 10 seconds, pulled up at 2 mm/second for coating, and dried at 80°C for 15 minutes. The lens was removed from the jig and further heat-cured at 120°C for 3 hours, thereby obtaining a film-covered lens subjected to hard coat treatment.

As a result of measuring the transmittance spectrum of the obtained lens with a spectrophotometer, as shown in FIG. 2, the maximum absorption was observed near 585 nm, which is the absorption wavelength of the functional dye.

FIG. 2 is a graph showing the transmittance of the film-covered lens in Example 1A.

[Anti-Reflection Coat Treatment]

A multilayer antireflection layer of five layers consisting of silicon oxide/zirconium oxide was formed on the film-covered lens subjected to hard coat treatment using a vacuum evaporation device.

When the appearance of the obtained lens was visually confirmed, no streak-like spots (uneven streaks) were observed.
Table 1 shows the evaluation results.

(Example 2A)

A test piece having a size of 30 mm × 5 mm and a thickness of 2.5 mm was obtained from a colorless and transparent A4-size polythiourethane film having the corresponding thickness listed in Table 1 for measuring the softening temperature and elastic modulus in the same manner as in Example 1A, except that no dye was added in [Preparation of Film].

When the elastic modulus of the resultant test piece was measured, the approximate line between temperature and elastic modulus had a slope of 10,000 or more upward to the right in a range of from 130°C to 150°C.

Further, [Application of Adhesive Layer], [Bonding Using Vacuum-Pressure Forming Machine], [Hard Coat Treatment], and [Anti-Reflection Coat Treatment] were performed in the same manner as in Example 1A, thereby obtaining a film-covered lens subjected to hard coat treatment and anti-reflection coat treatment. When the appearance of the obtained lens was visually confirmed, no streak-like spots were observed. Table 1 shows the evaluation results.

(Example 3A)

A test piece having a size of 30 mm × 5 mm and a thickness of 2.5 mm was obtained from a colorless and

transparent A4-size polythiourethane film having the corresponding thickness listed in Table 1 for measuring the softening temperature and elastic modulus in the same manner as in Example 1A, except that

the content of the mixture of 2,5-bis(isocyanatomethyl)bicyclo-[2.2.1]-heptane and 2,6-bis(isocyanatomethyl)bicyclo-[2.2.1]-heptane was changed to 53.1 parts by mass,
the content of hexamethylene diisocyanate was changed to 0 parts by mass,
the content of the thiol composition comprising 4-mercaptomethyl-1,8-dimercapto-3,6-dithiaoctane was changed to 17.9 parts by mass, and
the content of bis(2-mercaptoethyl)sulfide was changed to 23.8 parts by mass in [Preparation of Film].

When the elastic modulus of the resultant test piece was measured, the approximate line between temperature and elastic modulus had a slope of 4000 or more upward to the right in a range of from 130°C to 150°C.
Further, [Application of Adhesive Layer], [Bonding Using Vacuum-Pressure Forming Machine], [Hard Coat Treatment], and [Anti-Reflection Coat Treatment] were performed in the same manner as in Example 1A, except that the film heating temperature was set to the corresponding temperature listed in Table 1 in [Bonding Using Vacuum-Pressure Forming Machine], thereby obtaining a film-covered lens subjected to hard coat treatment and anti-reflection coat treatment. When the appearance of the obtained lens was visually confirmed, no streak-like spots were observed. Table 1 shows the evaluation results.

(Example 4A)

A test piece having a size of 30 mm × 5 mm and a thickness of 2.5 mm was obtained from an A4-size polythiourethane film having the corresponding thickness listed in Table 1 for measuring the softening temperature and elastic modulus in the same manner as in Example 1A, except that

0.007 parts by mass of PD-311S manufactured by Yamamoto Chemicals Inc. as a dye was changed to 0.018 parts by mass of Plast Red 8320 manufactured by ARIMOTO CHEMICAL Co., Ltd. and 0.012 parts by mass of Plast Yellow 8070 manufactured by ARIMOTO CHEMICAL Co., Ltd.,
31.9 parts by mass of the mixture of 2,5-bis(isocyanatomethyl)bicyclo-[2.2.1]-heptane and 2,6-bis(isocyanatomethyl)bicyclo-[2.2.1]-heptane was changed to 52.0 parts by mass of xylylene diisocyanate as an isocyanate composition,
the content of hexamethylene diisocyanate was changed to 0 parts by mass,
the content of the thiol composition comprising 4-mercaptomethyl-1,8-dimercapto-3,6-dithiaoctane was changed to 28.8 parts by mass, and
the content of bis(2-mercaptoethyl)sulfide was changed to 17.1 parts by mass in [Preparation of Film].

When the elastic modulus of the resultant test piece was measured, the approximate line between temperature and elastic modulus had a slope of 27000 or more upward to the right in a range of from 130°C to 150°C.
Further, [Application of Adhesive Layer], [Bonding Using Vacuum-Pressure Forming Machine], [Hard Coat Treatment], and [Anti-Reflection Coat Treatment] were performed according to the procedures as in Example 1A, thereby obtaining a film-covered lens subjected to hard coat treatment and anti-reflection coat treatment. When the appearance of the obtained lens was visually confirmed, no streak-like spots were observed. Table 1 shows the evaluation results.

(Example 5A)

A film (referred to as "film 5A") was prepared in the same manner as in [Preparation of Film] in Example 1A.
Next, an A4-size polythiourethane film 5B having the corresponding thickness listed in Table 2 was obtained in the same manner as in Example 1A, except that 0.007 parts by mass of PD-311S manufactured by Yamamoto Chemicals Inc. as a dye was changed to 0.046 parts by mass of Plast Yellow 8070 manufactured by ARIMOTO CHEMICAL Co., Ltd. in [Preparation of Film].
Details, evaluations, and the like of film 5B are listed in Table 2.
Next, [Application of Adhesive Layer] was performed in the same manner as in Example 1A for films 5A and 5B, thereby obtaining bonding films.

[Bonding Using Vacuum-Pressure Forming Machine]

The lens was wiped with Silbon paper impregnated with acetone, then immersed in a caustic soda bath at a liquid temperature of 55°C and a concentration of 10% for 5 minutes while being ultrasonicated. Next, the lens was cleaned by rinsing in a pure water bath for 15 minutes while being ultrasonicated and then dried with warm air at 70°C, thereby

preparing a substrate.

Next, the cleaned lens was placed on the substrate stage of a vacuum-pressure forming machine NGF-0404-T (manufactured by Fu-se Vacuum Forming Ltd.). A polythiourethane film 5A coated with the adhesive layer was placed on the film stage. At that time, the protective film was peeled off and the polythiourethane film 5A was placed such that the adhesive layer was on the substrate side.

Next, the vacuum chamber in which the film and substrate were placed was sealed, and the pressure was reduced to 3 kPa using a vacuum pump. At this time, the upper film chamber, which is the upper space with the film in between, and the lower mold chamber, which is the space in which the lower substrate is placed, were separated by the film, and the pressure in both the upper and lower spaces was reduced.

The film was heated from above with a heater until the surface temperature reached the corresponding temperature listed in Table 2. After the film reached the corresponding temperature listed in Table 2, some air was introduced into the upper film chamber to increase the pressure, causing the film to expand slightly toward the substrate below. In this state, the substrate stage was raised from below toward the film; thus, the substrate surface and the film surface were bonded together. After bonding, compressed air was sent to the upper film chamber to create a pressurized state of 300 kPa while the lower mold chamber remained under reduced pressure, and the state was maintained for about 5 seconds. Thereafter, the spaces above and below the film were returned to normal pressure, the sealed state was released, and the lens with the film bonded thereto was collected.

The film adhered to the lens, conforming to the curvature of the lens, and no air bubbles were observed between the substrate and the film.

Next, the film was cut out circumferentially along the outer periphery of the lens, and the lens portion to which the film was bonded was separated from the remaining film portion, thereby obtaining a lens with the film 5A bonded thereto.

Next, the surface of the lens to which the film 5A was bonded was blown with air, and the lens was again placed on the substrate stage of the vacuum-pressure forming machine NGF-0404-T. The polythiourethane film 5B coated with the adhesive layer was placed on the film stage such that the protective film was peeled off and the adhesive layer was on the substrate side.

Next, the vacuum chamber in which the film 5B and the lens to which the film 5A bonded were placed was sealed, and the pressure was reduced to 3 kPa using a vacuum pump. At this time, the upper film chamber, which is the upper space with the film in between, and the lower mold chamber, which is the space in which the lower substrate is placed, were separated by the film, and the pressure in both the upper and lower spaces was reduced.

The film was heated from above with a heater until the surface temperature reached the corresponding temperature listed in Table 2.

After the film reached the corresponding temperature listed in Table 2, some air was introduced into the upper film chamber to increase the pressure, causing the film to expand slightly toward the substrate below. In this state, the substrate stage was raised from below toward the film; thus, the substrate surface and the film surface were bonded together. After bonding, compressed air was sent to the upper film chamber to create a pressurized state of 300 kPa while the lower mold chamber remained under reduced pressure, and the state was maintained for about 5 seconds. Thereafter, the spaces above and below the film were returned to normal pressure, the sealed state was released, and the lens with the film 5B further bonded thereto was collected.

The film adhered to the lens, conforming to the curvature of the lens, and no air bubbles were observed between the substrate and the film.

Next, the film was cut out circumferentially along the outer periphery of the lens, and the lens portion to which the film was bonded was separated from the remaining film portion.

Then, the lens to which the film was bonded was heated in an electric furnace at 120°C for 1 hour to completely cure the primer, thereby obtaining a lens with the substrate, film 5A, and film 5B wholly attached thereto.

Further, [Application of Adhesive Layer], [Bonding Using Vacuum-Pressure Forming Machine], [Hard Coat Treatment], and [Anti-Reflection Coat Treatment] were performed according to the procedures as in Example 1A, thereby obtaining a film-covered lens subjected to hard coat treatment and anti-reflection coat treatment. When the appearance of the obtained lens was visually confirmed, no streak-like spots were observed. Table 2 shows the evaluation results.

(Example 6A)

A test piece having a size of 30 mm × 5 mm and a thickness of 2.5 mm was obtained from a colorless and transparent A4-size polythiourethane film having the corresponding thickness listed in Table 2 for measuring the softening temperature and elastic modulus in the same manner as in Example 1A, except

that the content of the mixture of 2,5-bis(isocyanatomethyl)bicyclo-[2.2.1]-heptane and 2,6-bis(isocyanatomethyl) bicyclo-[2.2.1]-heptane was changed to 53.1 parts by mass,
the content of hexamethylene diisocyanate was changed to 0 parts by mass,

the content of the thiol composition comprising 4-mercaptomethyl-1,8-dimercapto-3,6-dithiaoctane was changed to 8.9 parts by mass,
the content of bis(2-mercaptoethyl)sulfide was changed to 31.8 parts by mass, and
no dye was added in [Preparation of Film].

When the elastic modulus of the resultant test piece was measured, the approximate line between temperature and elastic modulus had an almost flat slope of -21000 or more in a range of from 130°C to 150°C.
Further, [Application of Adhesive Layer], [Bonding Using Vacuum-Pressure Forming Machine], [Hard Coat Treatment], and [Anti-Reflection Coat Treatment] were performed in the same manner as in Example 1A, except that the film heating temperature was set to the corresponding temperature listed in Table 2 in [Bonding Using Vacuum-Pressure Forming Machine], thereby obtaining a film-covered lens subjected to hard coat treatment and anti-reflection coat treatment. When the appearance of the obtained lens was visually confirmed, no streak-like spots were observed. Table 2 shows the evaluation results.

(Example 7A)

A film-covered lens was obtained in the same manner as in Example 1A, except that the urethane primer 1 was changed to urethane primer 2. When the appearance of the obtained lens was visually confirmed, no streak-like spots were observed. Table 2 shows the evaluation results.

(Comparative Example 1A)

A test piece having a size of 30 mm × 5 mm and a thickness of 2.5 mm was obtained from an A4-size polythiourethane film having the corresponding thickness listed in Table 3 for measuring the softening temperature and elastic modulus in the same manner as in Example 1A, except that

0.007 parts by mass of PD-311S manufactured by Yamamoto Chemicals Inc. as a dye was changed to 0.030 parts by mass of Plast Blue 8514 manufactured by Arimoto Chemical Co., Ltd.,
31.9 parts by mass of the mixture of 2,5-bis(isocyanatomethyl)bicyclo-[2.2.1]-heptane and 2,6-bis(isocyanatomethyl) bicyclo-[2.2.1]-heptane was changed to 43.5 parts by mass of xylylene diisocyanate,
the content of hexamethylene diisocyanate was changed to 0 parts by mass,
26.8 parts by mass of the thiol composition comprising 4-mercaptomethyl-1,8-dimercapto-3,6-dithiaoctane was changed to 56.5 parts by mass of a thiol compound comprising pentaerythritol tetrakis(3-mercaptopropionate), and
the content of bis(2-mercaptoethyl)sulfide was changed to 0 parts by mass in [Preparation of Film].

When the elastic modulus of the resultant test piece was measured, the approximate line between temperature and elastic modulus had a slope of 72000 or more upward to the right in a range of from 130°C to 150°C.
Further, [Application of Adhesive Layer] and [Bonding Using Vacuum-Pressure Forming Machine] were performed in the same manner as in Example 1A, except that the film heating temperature was set to the corresponding temperature listed in Table 3 in [Bonding Using Vacuum-Pressure Forming Machine].
The film could not withstand the impact during bonding, and cracks occurred around the lens in [Bonding Using Vacuum-Pressure Forming Machine]. Further, the film could not be bonded to the substrate surface because the film could not conform to the curvature surface of the lens, and air was trapped between the substrate and the film. Table 3 shows the evaluation results.

(Comparative Example 2A)

A test piece having a size of 30 mm × 5 mm and a thickness of 2.5 mm was obtained from an A4-size polythiourethane film having the corresponding thickness listed in Table 3 for measuring the softening temperature and elastic modulus in the same manner as in Example 1A, except that

0.007 parts by mass of PD-311S manufactured by Yamamoto Chemicals Inc. as a dye was changed to 0.018 parts by mass of Plast Red 8320 manufactured by ARIMOTO CHEMICAL Co., Ltd. and 0.012 parts by mass of Plast Yellow 8070 manufactured by ARIMOTO CHEMICAL Co., Ltd.
31.9 parts by mass of the mixture of 2,5-bis(isocyanatomethyl)bicyclo-[2.2.1]-heptane and 2,6-bis(isocyanatomethyl) bicyclo-[2.2.1]-heptane was changed to 52.0 parts by mass of xylylene diisocyanate,
the content of hexamethylene diisocyanate was changed to 0 parts by mass,
the content of the thiol composition comprising 4-mercaptomethyl-1,8-dimercapto-3,6-dithiaoctane was changed to

48.0 parts by mass, and
the content of bis(2-mercaptoethyl)sulfide was changed to 0 parts by mass in [Preparation of Film].

When the elastic modulus of the resultant test piece was measured, the approximate line between temperature and elastic modulus had a slope of 55000 or more upward to the right in a range of from 130°C to 150°C.
Further, [Application of Adhesive Layer] and [Bonding Using Vacuum-Pressure Forming Machine] were performed in the same manner as in Example 1A, except that the film heating temperature was set to the corresponding temperature listed in Table 3 in [Bonding Using Vacuum-Pressure Forming Machine].
The film could not be bonded to the substrate surface because the film could not conform to the curvature surface of the lens, and air was trapped between the substrate and the film in [Bonding Using Vacuum-Pressure Forming Machine]. Table 3 shows the evaluation results.

(Comparative Example 3A)

A test piece having a size of 30 mm × 5 mm and a thickness of 2.5 mm was obtained from an A4-size polythiourethane film having the corresponding thickness listed in Table 3 for measuring the softening temperature and elastic modulus in the same manner as in Example 1A, except that

0.007 parts by mass of PD-311S manufactured by Yamamoto Chemicals Inc. as a dye was changed to 0.030 parts by mass of Plast Blue 8514 manufactured by Arimoto Chemical Co., Ltd.,
the content of the mixture of 2,5-bis(isocyanatomethyl)bicyclo-[2.2.1]-heptane and 2,6-bis(isocyanatomethyl)bicyclo-[2.2.1]-heptane was changed to 26.5 parts by mass,
the content of hexamethylene diisocyanate was changed to 21.6 parts by mass,
the content of the thiol composition comprising 4-mercaptomethyl-1,8-dimercapto-3,6-dithiaoctane was changed to 44.5 parts by mass, and
the content of bis(2-mercaptoethyl)sulfide was changed to 0 parts by mass in [Preparation of Film].

When the elastic modulus of the resultant test piece was measured, the approximate line between temperature and elastic modulus had a slope of 51000 or more upward to the right in a range of from 130°C to 150°C.
Further, [Application of Adhesive Layer] and [Bonding Using Vacuum-Pressure Forming Machine] were performed in the same manner as in Example 1A, except that the film heating temperature was set to the corresponding temperature listed in Table 3 in [Bonding Using Vacuum-Pressure Forming Machine].
The film could not be bonded to the substrate surface because the film could not conform to the curvature surface of the lens, and air was trapped between the substrate and the film in [Bonding Using Vacuum-Pressure Forming Machine]. Table 3 shows the evaluation results.

(Comparative Example 4A)

A test piece having a size of 30 mm × 5 mm and a thickness of 2.5 mm was obtained from a colorless and transparent A4-size polythiourethane film having the corresponding thickness listed in Table 3 for measuring the softening temperature and elastic modulus in the same manner as in Example 1A, except that

the content of the mixture of 2,5-bis(isocyanatomethyl)bicyclo-[2.2.1]-heptane and 2,6-bis(isocyanatomethyl)bicyclo-[2.2.1]-heptane was changed to 53.1 parts by mass,
the content of hexamethylene diisocyanate was changed to 0 parts by mass,
the content of the thiol composition comprising 4-mercaptomethyl-1,8-dimercapto-3,6-dithiaoctane was changed to 0 parts by mass, and
the content of bis(2-mercaptoethyl)sulfide was changed to 39.7 parts by mass, and
no dye was added in [Preparation of Film].

When the elastic modulus of the resultant test piece was measured, the approximate line between temperature and elastic modulus had a slope of -51000 or more downward to the right in a range of from 130°C to 150°C.
Further, [Application of Adhesive Layer], [Bonding Using Vacuum-Pressure Forming Machine], and [Hard Coat Treatment] were performed in the same manner as in Example 1A, except that the film heating temperature was set to the corresponding temperature listed in Table 3 in [Bonding Using Vacuum-Pressure Forming Machine].
The surface of the lens subjected to hard coat treatment was eroded and clouded by the solvent used in the [Hard Coat Treatment]. Therefore, the film had poor solvent resistance.
Table 3 shows the evaluation results.

(Reference Example 1A)

[Preparation of Film], [Application of Adhesive Layer], [Bonding Using Vacuum-Pressure Forming Machine], and [Hard Coat Treatment] were performed in the same manner as in Example 1A, except that

PET film (LUMILAR T-60; film thickness: 50 μm) manufactured by TORAY INDUSTRIES, INC. was used as the film, and

the film heating temperature was set to the corresponding temperature listed in Table 3 in [Bonding Using Vacuum-Pressure Forming Machine].

No adhesion was achieved between the film and the hard coat layer in the lens subjected to hard coat treatment in the adhesion test. When the appearance of the obtained lens was visually checked, streak-like spots were observed on the entire lens surface. In addition, the scratch resistance was poor due to the soft film, and thick scratches appeared across the entire width of the steel wool.

Table 3 shows the evaluation results.

(Reference Example 2A)

[Preparation of Film], [Application of Adhesive Layer], [Bonding Using Vacuum-Pressure Forming Machine], and [Hard Coat Treatment] were performed in the same manner as in Example 1A, except that

an acrylic film (ACRYPLEN HBS-006; film thickness: 75 μm) manufactured by Mitsubishi Chemical Group Corporation was used as the film, and

the film heating temperature was set to the corresponding temperature listed in Table 3 in [Bonding Using Vacuum-Pressure Forming Machine].

When the appearance of the obtained lens was visually checked, streak-like spots were observed on the entire lens surface.

No adhesion was achieved between the film and the hard coat layer in the lens subjected to hard coat treatment in the adhesion test. In addition, the scratch resistance was poor due to the soft film, and thick scratches appeared across the entire width of the steel wool.

Table 3 shows the evaluation results.

[Table 1]

| | Example 1A | | Example 2A | | Example 3A | | Example 4A | |
|---|---|---|---|---|---|---|---|---|
| Type of isocyanate | Isocyanate 1 | Isocyanate 2 | Isocyanate 1 | Isocyanate 2 | Isocyanate 1 | - | Isocyanate 3 | - |
| Isocyanate equivalent of each isocyanate in total isocyanate | 60% | 40% | 60% | 40% | 100% | - | 100% | - |
| Type of thiol | Thiol 1 | Thiol 2 | Thiol 1 | Thiol 2 | Thiol 1 | Thiol 2 | Thiol 1 | Thiol 2 |
| Thiol equivalent of each thiol in total thiol | 60% | 40% | 60% | 40% | 40% | 60% | 60% | 40% |
| Trifunctional or higher thiol equivalent/total thiol equivalent | 60% | | 60% | | 40% | | 60% | |
| Bifunctional thiol equivalent/total thiol equivalent | 40% | | 40% | | 60% | | 40% | |
| Softening temperature (°C) | 82 | | 82 | | 97 | | 77 | |
| Molecular weight between crosslinking points (g/mol) | 1050 | | 1050 | | 1684 | | 991 | |
| Type of functional dye | PD-311S | | - | | PD-311S | | Plast Red8320<br>Plast Yellow8070 | |
| Temperature at which storage modulus is minimum (°C) | 108 | | 108 | | 128 | | 106 | |
| Minimum storage modulus (Pa) | $1.21\times10^7$ | | $1.21\times10^7$ | | $7.93\times10^6$ | | $1.31\times10^7$ | |
| Storage modulus at 150°C (Pa) | $1.30\times10^7$ | | $1.30\times10^7$ | | $8.12\times10^6$ | | $1.44\times10^7$ | |
| Film thickness (μm) | 185 | | 185 | | 185 | | 185 | |
| Number of films | 1 | | 1 | | 1 | | 1 | |
| Film bonding | | | | | | | | |
| Film heating temperature during bonding (°C) | 130 | | 130 | | 145 | | 130 | |
| Type of adhesive layer between substrate and film | Urethane primer 1 | | Urethane primer 1 | | Urethane primer 1 | | Urethane primer 1 | |
| Conformability to lens convex surface<br>Curvature radius = 83. 3 mm | 2 | | 2 | | 2 | | 2 | |
| Conformability to lens concave surface<br>Curvature radius = 83.3 mm | 2 | | 2 | | 2 | | 2 | |
| Film tear | Absent | | Absent | | Absent | | Absent | |
| Coating treatment | | | | | | | | |

(continued)

| | | Example 1A | Example 2A | Example 3A | Example 4A |
|---|---|---|---|---|---|
| Hard coat treatment | Yes or No | Yes | Yes | Yes | Yes |
| | Adhesion (Number of non-peeled squares out of 100 squares) | 100 | 100 | 100 | 100 |
| | Scratch resistance | 5 | 5 | 5 | 5 |
| | Cloudiness: present or absent | Absent | Absent | Absent | Absent |
| Anti-reflection coat treatment | Yes or No | Yes | Yes | Yes | Yes |
| | Adhesion (Number of non-peeled squares out of 100 squares) | 100 | 100 | 100 | 100 |
| | Scratch resistance | 4 | 4 | 4 | 4 |
| | Heat resistance | 90°C | 90°C | 90°C | 90°C |

[Table 2]

| | | Example 5A | | | | | Example 6A | | Example 7A | |
|---|---|---|---|---|---|---|---|---|---|---|
| | | Film 5A | | Film 5B | | Eyeglass lens material | | | | |
| Type of isocyanate | | Isocyanate 1 | Isocyanate 2 | Isocyanate 1 | Isocyanate 2 | (Surface side) 5B/Primer 1/5A/Primer 1 (Lens substrate side) | Isocyanate 1 | - | Isocyanate 1 | Isocyanate 2 |
| Isocyanate equivalent of each isocyanate in total isocyanate | | 60% | 40% | 60% | 40% | | 100% | - | 60% | 40% |
| Type of thiol | | Thiol 1 | Thiol 2 | Thiol 1 | Thiol 2 | | Thiol 1 | Thiol 2 | Thiol 1 | Thiol 2 |
| Thiol equivalent of each thiol in total thiol | | 60% | 40% | 60% | 40% | | 20% | 80% | 60% | 40% |
| Trifunctional or higher thiol equivalent/total thiol equivalent | | 60% | | 60% | | | 20% | | 60% | |
| Bifunctional thiol equivalent/total thiol equivalent | | 40% | | 40% | | | 80% | | 40% | |
| Softening temperature (°C) | | 82 | | 82 | | | 93 | | 82 | |
| Molecular weight between crosslinking points (g/mol) | | 1050 | | 1050 | | | 2756 | | 1050 | |
| Type of functional dye | | PD-311S | | Plast Yellow8070 | | | - | | PD-311S | |
| Temperature at which storage modulus is minimum (°C) | | 108 | | 108 | | | 150 | | 108 | |
| Minimum storage modulus (Pa) | | $1.21\times10^{7}$ | | $1.21\times10^{7}$ | | | $4.94\times10^{6}$ | | $1.21\times10^{7}$ | |
| Storage modulus at 150°C (Pa) | | $1.30\times10^{7}$ | | $1.30\times10^{7}$ | | | $4.94\times10^{6}$ | | $1.30\times10^{7}$ | |
| Film thickness (μm) | | 185 | | 185 | | | 190 | | 185 | |
| Number of films | | 1 | | 1 | | 2 | 1 | | 1 | |
| Film bonding | | | | | | | | | | |
| Film heating temperature during bonding (°C) | | - | | | | 130 | 140 | | 130 | |
| Type of adhesive layer between substrate and film | | Urethane primer 1 | | Urethane primer 1 | | - | Urethane primer 1 | | Urethane primer 2 | |
| Conformability to lens convex surface Curvature radius = 83. 3 mm | | 2 | | 2 | | | 2 | | 2 | |
| Conformability to lens concave surface Curvature radius = 83. 3 mm | | 2 | | 2 | | | 2 | | 2 | |
| Film tear | | Absent | | Absent | | | Absent | | Absent | |
| Coating treatment | | | | | | | | | | |
| Hard coat treatment | Yes or No | - | | | | Yes | Yes | | Yes | |
| | Adhesion (Number of non-peeled squares out of 100 squares) | | | | | 100 | 100 | | 100 | |
| | Scratch resistance | | | | | 5 | 5 | | 5 | |
| | Cloudiness: present or absent | | | | | Absent | Absent | | Absent | |
| Anti-reflection coat treatment | Yes or No | | | | | Yes | Yes | | Yes | |
| | Adhesion (Number of non-peeled squares out of 100 squares) | | | | | 100 | 100 | | 100 | |
| | Scratch resistance | | | | | 4 | 4 | | 4 | |
| | Heat resistance | | | | | 90°C | 90°C | | 90°C | |

[Table 3]

| | Comparative Example 1A | | Comparative Example 2A | | Comparative Example 3A | | Comparative Example 4A | | Reference Example 1A | Reference Example 2A |
|---|---|---|---|---|---|---|---|---|---|---|
| Type of isocyanate | Isocyanate 3 | - | Isocyanate 3 | - | Isocyanate 1 | Isocyanate 2 | Isocyanate 1 | - | Thermoplastic resin PET film Lumirror T-60 | Thermoplastic resin Acrylic film ACRYPLEN HBS006 |
| Isocyanate equivalent of each isocyanate in total isocyanate | 100% | - | 100% | - | 50% | 50% | 100% | - | | |
| Type of thiol | Thiol 3 | - | Thiol 3 | - | Thiol 3 | | Thiol 2 | - | | |
| Thiol equivalent of each thiol in total thiol | 100% | - | 100% | - | 100% | | 100% | - | | |
| Trifunctional or higher thiol equivalent/total thiol equivalent | 100% | | 100% | | 100% | | 0% | | - | - |
| Bifunctional thiol equivalent/total thiol equivalent | 0% | | 0% | | 0% | | 100% | | - | - |
| Softening temperature (°C) | 90 | | 86 | | 88 | | 89 | | 150 or more | 102 |
| Molecular weight between crosslinking points (g/mol) | 546 | | 709 | | 675 | | 37404 | | - | - |
| Type of functional dye | Plast Blue 8514 | | Plast Red 8320 Plast Yellow8070 | | Plast Blue 8514 | | - | | - | - |
| Temperature at which storage modulus is minimum (°C) | 114 | | 113 | | 113 | | 148 | | - | - |
| Minimum storage modulus (Pa) | $2.37\times10^7$ | | $1.83\times10^7$ | | $1.83\times10^7$ | | $3.63\times10^5$ | | - | - |
| Storage modulus at 150°C (Pa) | $2.62\times10^7$ | | $2.02\times10^7$ | | $2.03\times10^7$ | | $3.63\times10^5$ | | - | - |
| Film thickness (μm) | 190 | | 185 | | 185 | | 190 | | 50 | 75 |
| Number of films | 1 | | 1 | | 1 | | 1 | | 1 | 1 |
| Film bonding | | | | | | | | | | |
| Film heating temperature during bonding (°C) | 140 | | 140 | | 140 | | 140 | | 150 | 120 |

(continued)

| | | Comparative Example 1A | Comparative Example 2A | Comparative Example 3A | Comparative Example 4A | Reference Example 1A | Reference Example 2A |
|---|---|---|---|---|---|---|---|
| Type of adhesive layer between substrate and film | | Urethane primer 1 | Urethane primer 1 | Urethane primer 1 | Urethane primer 1 | Urethane primer 1 | Urethane primer 1 |
| Conformability to lens convex surface Curvature radius = 83. 3 mm | | 1 | 1 | 1 | 2 | 2 | 2 |
| Conformability to lens concave surface Curvature radius = 83. 3 mm | | 1 | 1 | 1 | 2 | 2 | 2 |
| Film tear | | Present | Absent | Absent | Absent | Absent | Absent |
| Coating treatment | | | | | | | |
| Hard coat treatment | Yes or No | - | - | - | Yes | Yes | Yes |
| | Adhesion (Number of non-peeled squares out of 100 squares) - | - | - | - | - | 0 | 0 |
| | Scratch resistance | - | - | - | - | 2 | 2 |
| | Cloudiness: present or absent | - | - | - | Present | Absent | Absent |

(continued)

| | | Comparative Example 1A | Comparative Example 2A | Comparative Example 3A | Comparative Example 4A | Reference Example 1A | Reference Example 2A |
|---|---|---|---|---|---|---|---|
| Anti-reflection coat treatment | Yes or No | - | - | - | - | - | - |
| | Adhesion (Number of non-peeled squares out of 100 squares) | - | - | - | - | - | - |
| | Scratch resistance | - | - | - | - | - | - |
| | Heat resistance | - | - | - | - | - | - |

As shown in Tables 1 to 3, conformability was excellent in the Examples, in which a polythiourethane film comprising polythiourethane having a molecular weight between crosslinking points of from 950 to 3000 was used. Solvent resistance was also excellent in the Examples because there was no cloudiness, and the adhesion evaluation was excellent.

Meanwhile, conformability was poor in Comparative Examples 1A to 3A, in which a polythiourethane film comprising polythiourethane having a molecular weight between crosslinking points of less than 950 was used.

In addition, there was cloudiness in Comparative Example 4A, in which a polythiourethane film comprising polythiourethane having a molecular weight between crosslinking points of more than 3000. Therefore, the film surface was eroded and damaged by the solvent in [Hard Coat Treatment], resulting in poor solvent resistance.

Further, in a film other than a polythiourethane film was used in Reference Examples 1A and 2A, when the appearance of the obtained lens was visually checked, streak-like spots were observed on the entire lens surface.

It was necessary to formulate and use a particular hard coat liquid for layered lenses using PET film, acrylic film, and the like, but this was complicated and required additional steps.

Using a layered lens with a polythiourethane film on the surface layer allowed for achieving higher adhesion without limiting the type of hard coat liquid, and an eyeglass lens with a favorable appearance without streaks can be obtained.

In Examples 1A to 7A, using polythiourethane as the film made it possible to achieve adhesion without changing the hard coat used for polythiourethane lenses.

Hereinafter, embodiments according to the second embodiment will be described in detail with reference to Examples. Note that the invention of the second embodiment is in no way limited to the description of these Examples.

[Evaluation Method]

In the Examples, evaluation was performed as follows.

(Outflow Start Temperature)

The outflow start temperature was measured as described above.

(Mass Increase Rate in Warm Water Resistance Test)

The mass increase rate in the warm water resistance test was measured as described above.

(Glass Transition Temperature of Dry Matter of Polyurethane Aqueous Dispersion)

The glass transition temperature of a dry matter of a polyurethane aqueous dispersion was measured as described above.

(Thickness Measurement)

The thickness of each layer was measured using Digimatic Indicator ID-H and Comparator Stand BSB-20X manufactured by Mitutoyo Corporation.

(Storage Modulus Measurement)

The storage modulus was measured by the method described in the above section (Storage Modulus Measurement).

(Measurement of Softening Temperature of Thermoplastic Resin)

The softening temperature was measured using the method described in the above section (thermoplastic resin).

(Evaluation of Adhesion of Eyeglass Lens)

A 100-square cut was made on the surface of the eyeglass lens, and a peel test was conducted in accordance with JIS K5400-8.5 (1999) using CELLOTAPE (registered trademark) CT405AP-18 manufactured by NICHIBAN Co., Ltd.

Adhesion was evaluated by visually checking the number (%) of squares where no peeling occurred among 100 squares.

(Adhesion after Processing Outer Periphery of Eyeglass Lens)

The outer periphery of an eyeglass lens was trimmed by a rotary blade rotating at high speed centering on the geometric center of the lens while jetting water using a patternless edger LE-1200 manufactured by NIDEK CO., LTD., thereby shaping a circle having a radius (half of the maximum length in plan view) of 37.5 mm by polishing.
After polishing, the eyeglass lens was visually checked under fluorescent light to determine whether the functional resin layer had peeled off.
A case in which there was no peeling of the functional resin layer was evaluated as A, and a case in which there was peeling was evaluated as B.

(Evaluation of Scratch Resistance of Hard Coat Layer)

BON STAR #0000 steel wool manufactured by NIHON STEEL WOOL Co., Ltd., processed to about 3 cm in length and width, was attached to a reciprocating abrasion tester HEIDON TriboGear TYPE: 30S manufactured by Shinto Scientific Co., Ltd. using double-sided tape. The steel wool was rubbed over the hard coat surface 10 times with a load of 1 kg, and the rubbed area was visually observed to confirm the number and depth of scratches on the coat surface for evaluation.

(Alkali Resistance Test)

A 10% by mass potassium hydroxide aqueous solution was charged into an ultrasonic cleaner MCS-6 manufactured by AS ONE Corporation.
An eyeglass lens was immersed in this aqueous solution and irradiated with ultrasonic waves at from 60°C to 63°C for 20 minutes. After the ultrasonic wave irradiation, the eyeglass lens was collected and cleaned with running water for 3 minutes. Subsequently, this eyeglass lens was immersed in a container equipped with an ultrasonic generator filled with ion-exchanged water and irradiated with ultrasonic waves at 45°C for 5 minutes.
After the ultrasonic wave irradiation, the eyeglass lens was collected, and the adhesion of the adhesive layer was evaluated. For evaluation of the adhesion, a 100-square cut was made on the surface of the eyeglass lens, and a peel test was conducted in accordance with JIS K5400-8.5 (1999) using CELLOTAPE (registered trademark) CT405AP-18 manufactured by NICHIBAN Co., Ltd.
Adhesion was evaluated by visually checking the number (%) of squares where no peeling occurred among 100 squares.

<Preparation of Lens Substrate A>

A 100-mL volume sample bottle was charged with 0.02 parts by mass (1,000 mass ppm) of ZELEC (registered trademark) UN manufactured by Stepan Company as an internal mold release agent, 0.01 parts by mass (500 mass ppm) of dibutyltin(II) dichloride as a catalyst, and 10.12 parts by mass of 2,5(6)-bis(isocyanatomethyl)bicyclo-[2.2.1]-heptane as a polymerizable compound, followed by mixing by stirring at 20°C, thereby obtaining a homogeneous solution.
This homogeneous solution was further charged with 4.78 parts by mass of pentaerythritol tetrakis(3-mercaptopropionate) as a polymerizable compound and 5.1 parts by mass of 4-mercaptomethyl-1,8-dimercapto-3,6-dithiaoctane, followed by mixing by stirring at 20°C, thereby obtaining a homogenous polymerizable composition.
The resultant polymerizable composition was degassed under reduced pressure of 400 Pa or less for from 30 minutes to 1 hour and then filtered through a PTFE membrane filter having a pore size of 1 μm. The filtrate was injected into a cavity (circular plano shape; radius (half the maximum length in plan view): 40.5 mm; curved shape: curvature radius of 128mm for both concave and convex surfaces; center thickness: 2mm) defined by the glass mold and tape and sealed with tape.
The mold with the polymerizable composition sealed in the cavity was placed in a polymerization oven, and the temperature was gradually raised from 25°C to 120°C for 19 hours and then held at 120°C for 2 hours for polymerization. After cooling, the tape was peeled off from the glass mold, and the lens substrate A, which was a molded body made of a cured resin formed inside, was removed.
The resultant molded product was colorless and transparent, had a refractive index ne of 1.60, a refractive index nd of 1.59, an Abbe's number ve of 40, an Abbe's number vd of 42, and a glass transition temperature of 121°C.

(Refractive Index (ne, nd) and Abbe's Number (ve, vd) of Lens Substrate)

Measurement was performed at 20°C using a Pulfrich refractometer KPR-30 manufactured by Kalnew Optical Industrial Co., Ltd. The F' line (Cd spectral line with a wavelength of 479.99 nm), C' line (Cd spectral line with a wavelength

of 643.85 nm), F line (H spectral line with a wavelength of 486.13 nm), C line (H spectral line with a wavelength of 656.27 nm) spectral line), e-line (spectral line of Hg with a wavelength of 546.07 nm), and d-line (spectral line of He with a wavelength of 587.56 nm) were transmitted through the molded body for the measurement of the refractive index and Abbe's number. The refractive index (ne) and Abbe's number (νe) at the e-line wavelength and the refractive index (nd) and Abbe's number (νd) at the d-line wavelength were calculated in accordance with JIS B 7090: 1999 and ISO 7944: 1998.

(Glass Transition Temperature of Lens Substrate)

The glass transition temperature was measured by a TMA penetration method (load: 50 g; pin tip: 0.5 mmφ; temperature increase rate: 10°C/min; heating temperature range: from room temperature to 140°C) using Thermomechanical Analyzer TMA-60 manufactured by SHIMADZU CORPORATION.
Furthermore, the lens substrate A was alkali-washed in the following manner.
A 10% by mass potassium hydroxide aqueous solution was charged into an ultrasonic cleaner MCS-6 manufactured by AS ONE Corporation. The oscillation frequency of the ultrasonic cleaner was 40 kHz, and the ultrasonic output was 150W.
The lens substrate A was immersed in this solution and irradiated with ultrasonic waves for 5 minutes at from 50°C to 55°C. After ultrasonic wave irradiation, the lens substrate was collected and cleaned with running water for 3 minutes. Subsequently, this lens substrate was immersed in a container equipped with an ultrasonic generator filled with ion-exchanged water and irradiated with ultrasonic waves at 45°C for 5 minutes. After ultrasonic wave irradiation, the lens substrate was collected and heated for about 30 minutes in a constant-temperature oven with forced air circulation set at 110°C. Once the heating was completed, the substrate was removed from the oven and left at a room temperature of from 18°C to 30°C for 30 minutes or longer, thereby cooling the lens substrate A.

<Synthesis Example of Polyurethane Aqueous Dispersion 1>

A four-necked flask equipped with a stirrer, a thermometer, a reflux tube, and a nitrogen introduction tube was charged with 205.6 g of UH-CARB200 (polycarbonate diol manufactured by Ube Industries, Ltd.; average molecular weight: 2000) as an active hydrogen compound, 15.4 g of triethylene glycol, 11.2 g of dimethylolpropionic acid, 1.8 g of trimethylolpropane, and 145.0 g of acetonitrile as a solvent.
Thereafter, 91.1 g of 1,3-(bisisocyanatomethyl)cyclohexane as an isocyanate compound was added to the four-necked flask, and the mixture was reacted at 75°C for 6 hours. After the isocyanate content (NCO%) of the reaction solution reached 2.9 mol%, 4.8 g of 2-hydroxyethyl acrylate and 0.017 g of stannous octylate were added to the four-necked flask and reacted at 70°C for 2 hours, thereby obtaining a urethane prepolymer (NCO%=2.45%).
After cooling this reaction solution to 40°C, it was neutralized with 8.3 g of triethylamine, and 650 g of ion-exchanged water was gradually added to disperse it in water. Next, an amine aqueous solution containing 4.9 g of hydrazine monohydrate and 6.8 g of KBM602 (N-β(aminoethyl)-γ-aminopropylmethyldimethoxysilane, manufactured by Shin-Etsu Chemical Co., Ltd.) dissolved in 46.8 g of ion-exchanged water was added to an aqueous dispersion of urethane prepolymer, thereby causing a chain extension reaction. Further, acetonitrile was distilled off, thereby obtaining a polyurethane aqueous dispersion 1 comprising polycarbonate-based polyurethane having an anionic functional group as an aqueous dispersion of aqueous polyurethane resin having a solid content of 35% by mass.

<Optical Spectrum Measurement>

The spectral characteristics of the functional resin layer and functional dye were measured at room temperature using a UV-Vis spectrophotometer UV-1800 manufactured by SHIMADZU CORPORATION. The measurement wavelength range was from 350 nm to 800 nm.

[Example 1B]

(Preparation of Functional Resin Layer)

As the functional resin layer, an acrylic film with the UV-cutting function (ACRYPLEN HBA007P manufactured by Mitsubishi Chemical Group Corporation; thickness: 75 μm; transmittance at 380 nm: 6%; vertical length: 297 mm; horizontal length: 210 mm) was used.
The above-described functional resin layer was plasma-treated using the following method.

<Plasma Treatment>

A small plasma modifier (PM100 manufactured by Yamato Scientific Co., Ltd.) with a capacitor-shaped two-part electrode structure was used. During plasma treatment, the chamber containing the sample was evacuated, oxygen gas was introduced at a rate of 50 mL/min, and irradiation was performed at an output of 15 W for 15 seconds.

(Preparation of Layered body)

The plasma-treated functional resin layer was fixed on a flat glass plate, and polyurethane aqueous dispersion SUPERFLEX 470 (manufactured by DKS Co. Ltd.) was dropped onto the functional resin layer using a dropper.
The dropped polyurethane aqueous dispersion was applied onto the functional resin layer using a bar coater (No. 10). It was then dried for 5 minutes in an electric furnace set at 60°C, thereby obtaining a layered body comprising a functional resin layer and a polycarbonate-based polyurethane adhesive layer. The thickness of the polycarbonate-based polyurethane adhesive layer is as listed in Table 4.

(Bonding of Lens Substrate)

The resultant layered body (i.e., adhesive film) was cooled to room temperature and then bonded to the lens substrate A using a vacuum forming machine, thereby obtaining an eyeglass lens comprising the functional resin layer, the polycarbonate-based polyurethane adhesive layer, and the lens substrate in that order.
Specifically, a vacuum forming machine (NGF-0404-T) manufactured by Fu-se Vacuum Forming Ltd. was used.
In this machine, a heated and softened layered body is bonded to the substrate in a vacuumed chamber, and then the film is pressed against the substrate using compressed air. Molding parameters can be changed depending on the material of the functional resin layer, the material of the mold release film, and the like for this machine, if appropriate.
When bonding, the polycarbonate-based polyurethane adhesive layer was applied to the convex surface of the lens substrate A. During bonding, the heating temperature of the layered body was 115°C, and the pressure inside the chamber was 1 kPa.
After bonding, the eyeglass lens was cooled to room temperature, and the layered body protruding from the lens substrate was cut out. Thereafter, the eyeglass lens was reheated in an electric furnace set at 120°C for 1 hour, thereby producing an eyeglass lens.

[Example 2B]

(Preparation of Functional Resin Layer)

Into a glass vial, 0.10 parts by mass of a tetraazaporphyrin compound as a visible light-absorbing dye (PD-311S manufactured by Yamamoto Chemicals Inc.; maximum absorption wavelength: 585 nm), 0.10 parts by mass of polyether-modified silicone as a leveling agent (KF-352A manufactured by Shin-Etsu Chemical Co., Ltd.), 1.0 parts by mass of 2-(2'-hydroxy-5'-t-octylphenyl)benzotriazole as a UV absorber (VIOSORB 583 manufactured by KYODO CHEMICAL COMPANY LIMITED), 0.5 parts by mass of a sulfonium salt compound as a cationic polymerization initiator (CPI-210S manufactured by San-Apro Ltd., details are described below), 70 parts by mass of 3',4'-Epoxycyclohexylmethyl-3,4-epoxycyclohexane carboxylate as a cationic polymerizable compound (CELLOXIDE 2021P manufactured by Daicel Corporation, details are described below) were weighed.

- CPI-210S: Cationic polymerization initiator, which is a triarylsulfonium salt represented by the following formula where Rf is a perfluoroalkyl group, and n is an integer from 1 to 5.

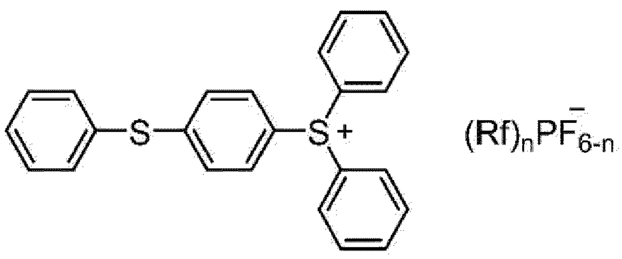

- CELLOXIDE 2021P: Cationic polymerizable compound, which is 3',4'-epoxycyclohexylmethyl-3,4-epoxycyclohexane carboxylate represented by the following formula.

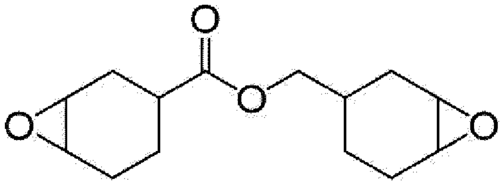

A stirring bar was placed in the vial, and the mixture was stirred and mixed using a magnetic stirrer at a rotation speed of 100 rpm (revolutions per minute) to 300 rpm over 2 hours. The glass vial was capped during mixing to prevent contact with outside air.
After visually confirming that the mixture had become a homogeneous solution, 30 parts by mass of a Poloxamer compound consisting of ethyleneoxy and propyleneoxy groups (ADEKA NOL L-64 manufactured by ADEKA CORPORATION; average molecular weight: 2,900) was added as a cationic polymerizable compound to this homogeneous solution and stirred and mixed at a rotation speed of from 100 rpm to 300 rpm for from 30 minutes to 2 hours.
During mixing, the mixture was heated to from 30°C to 60°C using a ceramic heater or oil bath as necessary. After visually confirming that the mixture had become a homogeneous solution, it was cooled to room temperature, thereby obtaining a homogeneous polymerizable composition for a functional resin layer.
The obtained polymerizable composition was filtered using a PTFE membrane filter having a pore size of from 1 μm to 5 μm manufactured by ADVANTEC Group.
A mold release film made of uniaxially stretched polypropylene (thickness: 50 μm; length: 297 mm; width: 210 mm) was fixed on a flat UV-transparent glass plate.
On top of the mold release film, the polymerizable composition for the functional resin layer was dropped with a dropper, applied over the mold release film using a bar coater (No. 20), and UV-cured with a UV curing apparatus, thereby obtaining a functional resin layer with the mold release film.
The detailed conditions for UV curing are as follows.

<UV Curing Apparatus>

A batch-type UV curing apparatus equipped with a UV irradiation power source UB012-0BM-60Hz manufactured by EYE GRAPHICS COMPANY was used. The box-shaped housing of this curing apparatus accommodates a sample holder and metal halide lamps M01-L212 (arc length: 122 mm; lamp output: 80 W/cm) manufactured by EYE GRAPHICS COMPANY installed at the top and bottom of the sample holder, respectively. The UV light irradiation time of this curing apparatus can be changed, and the lamp output can be switched in two stages: 750W and 1,000W. In addition, the distance between the sample and the metal halide lamp is also variable.

<Measurement of UVA Ultraviolet Intensity>

The ultraviolet intensity in the UVA (from 320 nm to 390 nm) wavelength range was measured using a UVA single-band photometer UVICURE (registered trademark) Plus II manufactured by EIT, INC.

<Measurement of UVC Ultraviolet Intensity>

The ultraviolet intensity in the UVC (from 250 nm to 260 nm) wavelength range was measured using a UVC single-band photometer UVICURE Plus II manufactured by EIT, INC.
During UV curing, UV light was irradiated from both the upper side and the lower side (glass plate side) of the polymerizable composition of the functional resin layer.
Details of the UV light irradiated from the upper side are as follows.

Irradiation intensity of UV light in the UVA wavelength range: 110 $mW/cm^2$
Irradiation intensity of UV light in the UVC wavelength range: 30 $mW/cm^2$
Cumulative amount of UV light in the UVA wavelength range: 3,300 $mJ/cm^2$
Cumulative amount of UV light in the UVC wavelength range: 1,000 $mJ/cm^2$

Details of the UV light irradiated from the lower side are as follows.

Irradiation intensity of UV light in the UVA wavelength range: 100 $mW/cm^2$
Irradiation intensity of UV light in the UVC wavelength range: 25 $mW/cm^2$
Cumulative amount of UV light in the UVA wavelength range: 3,000 $mJ/cm^2$

Cumulative amount of UV light in the UVC wavelength range: 800 $mJ/cm^2$

The UV irradiation of the polymerizable composition for the functional resin layer was carried out in an atmospheric atmosphere with a relative humidity of from 30% to 70% and a temperature of from 18°C to 30°C. The thickness of the resultant functional resin layer (cured product of the polymerizable composition for the functional resin layer) is listed in Table 4.

The temperature and relative humidity were measured using a tabletop temperature and humidity meter Testo 608-H2 manufactured by Testo K.K.

As a result of measuring the optical spectrum of this functional resin layer, this functional resin layer had a peak at a wavelength of 585 nm, a transmittance of 37% at 585 nm, and a wavelength-cutting function.

The optical spectrum was measured at room temperature using a UV-Vis spectrophotometer UV-1800 manufactured by SHIMADZU CORPORATION. The measurement wavelength range was from 350 nm to 800 nm.

The functional resin layer with the resultant mold release film was plasma-treated in the same method as described above.

(Preparation of Layered body)

After the plasma treatment, the polyurethane aqueous dispersion 1 was dropped onto the surface of the functional resin layer with a dropper and applied using a bar coater (No. 10), and then dried for 5 minutes in an electric furnace set at 60°C, thereby obtaining a layered body comprising a functional resin layer and a polycarbonate-based polyurethane adhesive layer. The thickness of the polycarbonate-based polyurethane adhesive layer is as listed in Table 1.

(Bonding of Lens Substrate)

The resultant layered body (i.e., adhesive film) was cooled to room temperature and then bonded to the lens substrate A using a vacuum forming machine, thereby obtaining an eyeglass lens comprising the functional resin layer, the polycarbonate-based polyurethane adhesive layer, and the lens substrate in that order.

The specific method was the same as the method described in Example 1B, except that the heating temperature of the layered body was set to 85°C.

After bonding, the eyeglass lens was cooled to room temperature, and the layered body protruding from the lens substrate was cut out. Thereafter, the eyeglass lens was reheated in an electric furnace set at 120°C for 1 hour, thereby producing an eyeglass lens.

(Cleaning of Eyeglass Lens)

A 10% by mass potassium hydroxide aqueous solution was charged into an ultrasonic cleaner MCS-6 manufactured by AS ONE Corporation.

The eyeglass lens obtained above was immersed in this solution and irradiated with ultrasonic waves at from 55°C to 60°C for 10 minutes. After the ultrasonic wave irradiation, the eyeglass lens was collected and cleaned with running water for 3 minutes. Subsequently, this eyeglass lens was immersed in a container equipped with an ultrasonic generator filled with ion-exchanged water and irradiated with ultrasonic waves at 45°C for 5 minutes.

After ultrasonic wave irradiation, the eyeglass lens was collected and heated for about 10 minutes in a constant-temperature oven with forced air circulation set at 80°C. Once the heating was completed, the eyeglass lens was removed from the oven and left at a room temperature of from 18°C to 30°C for 30 minutes or longer, thereby cooling the eyeglass lens.

(Formation of Hard Coat Layer)

The eyeglass lens cooled to room temperature was fixed with a vacuum chuck to a spin coater MS-150A manufactured by MIKASA CO., LTD equipped with a rotation jig, and rotated at a constant rotation speed. On the functional resin layer of the rotating eyeglass lens, 5 mL to 10 mL of MP-1179, a hard coat liquid manufactured by SDC Technologies Inc., was applied over from 10 to 20 seconds using a dropper.

The rotation speed of the eyeglass lens was adjusted in a range of from 300 rpm to 400 rpm, if appropriate, such that the thickness of the hard coat layer was 3 μm.

When applying the hard coat liquid, the dropper was applied either without moving it from the center of the eyeglass lens or by moving the dropper outward from the center of the eyeglass lens.

After dropping the hard coat liquid, the eyeglass lens was further rotated at a constant speed for about from 160 to 170 seconds such that the hard coat liquid was uniformly applied to the surface of the eyeglass lens.

After applying the hard coat liquid, the eyeglass lens was heated in a constant-temperature oven with forced air circulation at 110°C for about 2 hours. After heating was completed, the eyeglass lens was removed from the oven and cooled to room temperature, thereby obtaining an eyeglass lens having a hard coat layer on the surface.

The adhesion of the hard coat layer of the resultant eyeglass lens was evaluated according to the method described in the adhesion evaluation above.

The number (%) of squares in which peeling of the functional resin layer was not observed was 100%, and no peeling was observed between the functional resin layer and the hard coat layer.

In a case in which a lens with a hard coat layer layered on a functional resin layer is subjected to the above-described adhesion test, and peeling occurs, it means that the film has poor alkali resistance.

In other words, when the functional resin layer is damaged by the solvent such as alkali used in pretreatment in hard coat treatment, the functional resin layer and the hard coat layer cannot be brought into sufficient contact with each other, resulting in the peeling described above.

The scratch resistance of the hard coat layer of the resultant eyeglass lens was evaluated according to the method described in the evaluation of scratch resistance of the hard coat layer described above.

No deep scratches occurred in the resulting hard coat layer.

[Example 3B]

An eyeglass lens was manufactured in the same method as Example 1B, except that SUPERFLEX 470, which is a polyurethane aqueous dispersion, was changed to EVAFANOL HA-170 (manufactured by NICCA CHEMICAL CO., LTD.).

[Comparative Example 1B]

An eyeglass lens was manufactured in the same method as Example 1B, except that SUPERFLEX 470, which is a polyurethane aqueous dispersion, was changed to SUPERFLEX 620 (manufactured by DKS Co. Ltd.).

[Table 4]

| | | Example 1B | Example 2B | Example 3B | Comparative Example 1B |
|---|---|---|---|---|---|
| Functional resin layer | Material | Acrylic film | Photocurable epoxy resin | Acrylic film | Acrylic film |
| | Thickness (μm) | 75 | 23 | 75 | 75 |
| | Softening temperature (°C) | 92 | - | 92 | 92 |
| Polyurethane aqueous dispersion | Material | Polycarbonate-based polyurethane | Polycarbonate-based polyurethane | Polycarbonate-based polyurethane | Polyester-based polyurethane |
| | Type of isocyanate compound | Non-yellowing isocyanate | 1,3-H6XDI | Non-yellowing isocyanate | Non-yellowing isocyanate |
| | Type of active hydrogen compound | Polycarbonate diol | Polycarbonate diol | Polycarbonate diol | Polyester diol |
| | Ionic | Anion | Anion | Anion | Cation |
| | Solid content concentration (%) | 38 | 35 | 37 | 30 |
| | Particle size of polycarbonate-based polyurethane particles (nm) | 50 | - | 30 | 20 |

(continued)

| | | Example 1B | Example 2B | Example 3B | Comparative Example 1B |
|---|---|---|---|---|---|
| Dry matter of polyurethane aqueous dispersion | Storage modulus (80°C, MPa) | 2.3 | 0.96 | 69 | 88.2 |
| | Outflow start temperature (°C) | 165 | 206 | 192 | 158 |
| | Mass increase rate (%) in warm water resistance test | 7 | 14 | 19 | 487 |
| | Glass transition temperature (°C) | -16 | -20 | -17 | 50 |
| Polyurethane adhesive layer | Thickness (μm) | 6 | 6 | 6 | 5 |
| Lens material | Material | Thiourethane | Thiourethane | Thiourethane | Thiourethane |
| Bonding condition | Method | Bonding | Transfer (release film) | Bonding | Bonding |
| | Heating temperature (°C) | 115 | 85 | 115 | 115 |
| Adhesion evaluation | | | | | |
| Adhesion of eyeglass lens (%) | | 100% | 100% | 100% | 30% |
| Adhesion after machining the outer periphery of eyeglass lens | | A | A | A | - |
| Adhesion after alkali resistance test (%) | | 100% | 100% | 100% | 0% |

As shown in Table 4, the adhesion of the eyeglass lens and the adhesion after machining of the outer periphery of the eyeglass lens were excellent in the Examples using a method of producing an eyeglass lens, comprising a step of forming a polycarbonate-based polyurethane adhesive layer consisting of a dry matter of a polyurethane aqueous dispersion comprising a polycarbonate-based polyurethane having an anionic functional group on at least one side of a functional resin layer containing a functional dye, thereby obtaining a layered body, and a step of heating the layered body at from 50°C to 150°C and bonding it to a lens substrate under reduced pressure of 20 kPa or less in a direction such that the polycarbonate-based polyurethane adhesive layer is in contact with the lens substrate, thereby obtaining an eyeglass lens, wherein the dry matter of the polyurethane aqueous dispersion has a storage modulus of from 0.1 MPa to 80 MPa at 80°C measured under Condition 1. Therefore, an eyeglass lens comprising a polycarbonate-based polyurethane adhesive layer having excellent adhesion to the lens substrate could be produced.

In addition, the alkali resistance test results in the examples were excellent. Therefore, an eyeglass lens comprising a polycarbonate-based polyurethane adhesive layer having excellent alkali resistance could be produced.

Meanwhile, the eyeglass lens was poor in adhesion in Comparative Example 1B, in which dry matter of a polyurethane aqueous dispersion having a storage modulus of more than 80 MPa at 80°C was used. Therefore, an eyeglass lens comprising a polycarbonate-based polyurethane adhesive layer having excellent adhesion to the lens substrate could not be produced.

In addition, the alkali resistance test results in Comparative Example 1B were also poor. Therefore, an eyeglass lens comprising a polycarbonate-based polyurethane adhesive layer having excellent alkali resistance could not be produced either.

The disclosures of Japanese Patent Application Nos. 2022-044196 and 2022-044197, filed on March 18, 2022, are incorporated herein by reference in their entirety.

All publications, patent applications, and technical standards mentioned herein are incorporated herein by reference to the same extent as if each individual publication, patent application, and technical standard were specifically and individually noted to be incorporated by reference.

Reference Signs List

1 Heater
2 Film
3 Substrate
4 Vacuum
5 Stage rise
6 Compressed air
7 Trimming

## Claims

1. A polythiourethane film comprising polythiourethane,
wherein the polythiourethane is a reaction product of a bifunctional thiol compound, a trifunctional or higher thiol compound, and an isocyanate compound.

2. The polythiourethane film according to claim 1, wherein a thiol equivalent of the bifunctional thiol compound with respect to a total thiol equivalent of 100% for the bifunctional thiol compound and the trifunctional or higher thiol compound is from 20% to 95%.

3. The polythiourethane film according to claim 1, which has a thickness of from 100 μm to 600 μm.

4. The polythiourethane film according to claim 1, which has a minimum storage modulus at from 30°C to 160°C, wherein the minimum storage modulus is from $3.00 \times 10^6$ Pa to $1.40 \times 10^7$ Pa.

5. The polythiourethane film according to claim 1, wherein the polythiourethane has a molecular weight between crosslinking points of from 950 to 3000.

6. The polythiourethane film according to claim 1, further comprising a functional dye.

7. The polythiourethane film according to claim 6, wherein the functional dye is a specific wavelength cut-off dye or a photochromic dye.

8. An eyeglass lens material comprising the polythiourethane film according to any one of claims 1 to 7 and a polyurethane adhesive layer that is attached to at least one side of the polythiourethane film.

9. The eyeglass lens material according to claim 8, wherein the polyurethane adhesive layer comprises a polycarbonate-based polyurethane containing an anionic functional group.

10. The eyeglass lens material according to claim 8, further comprising a hard coat layer as an outermost layer.

11. An eyeglass lens comprising:

    the eyeglass lens material according to claim 8; and
    an eyeglass lens substrate attached to the polyurethane adhesive layer in the eyeglass lens material.

12. The eyeglass lens according to claim 11, wherein the eyeglass lens substrate has a convex or concave surface attached to the polyurethane adhesive layer in the eyeglass lens material.

13. The eyeglass lens according to claim 11, wherein the eyeglass lens substrate has a curvature radius of from 62.5 mm to 125.0 mm.

14. The eyeglass lens according to claim 11, which comprises two or more sheets of the eyeglass lens material.

15. The eyeglass lens according to claim 11, wherein the eyeglass lens substrate comprises at least one selected from the

group consisting of polyacrylate, polyethylene terephthalate, polycarbonate, polytriacetylcellulose, polyvinyl alcohol, polyester, polyamide, polyepoxy, polyepisulfide, polyurethane, and polythiourethane.

**16.** A method of producing an eyeglass lens, comprising a step of bonding the eyeglass lens material according to claim 8 to an eyeglass lens substrate, thereby obtaining an eyeglass lens.

**17.** The method of producing an eyeglass lens according to claim 16, comprising a step of bonding the eyeglass lens material to the eyeglass lens substrate using a vacuum-pressure forming machine, thereby obtaining the eyeglass lens.

FIG.1

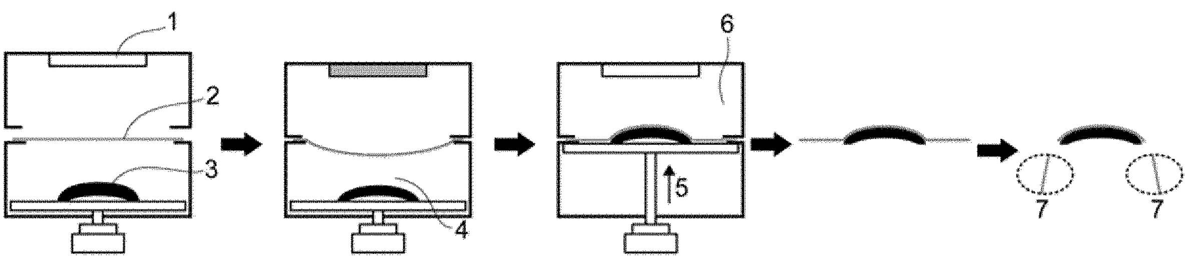

FIG.2

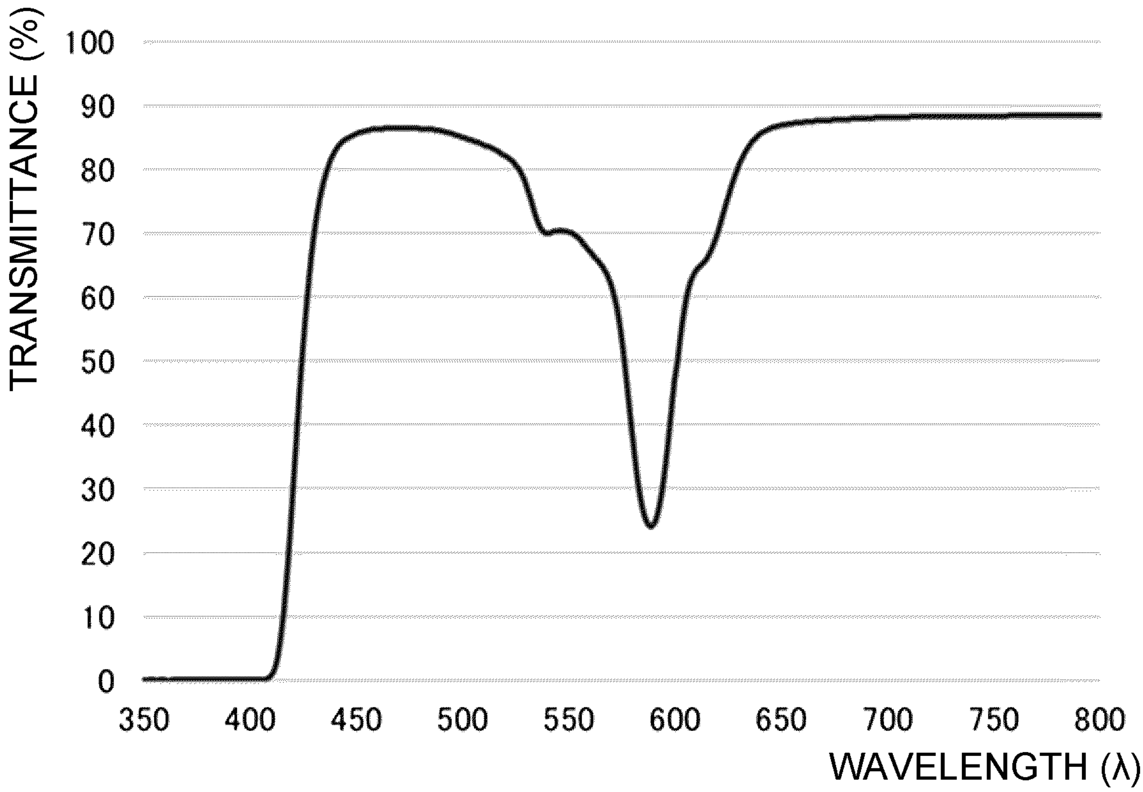
TRANSMITTANCE (%)
100
90
80
70
60
50
40
30
20
10
0
350
400
450
500
550
600
650
700
750
800
WAVELENGTH (λ)

**INTERNATIONAL SEARCH REPORT**

International application No. **PCT/JP2023/002153**

**A. CLASSIFICATION OF SUBJECT MATTER**

***G02C 7/00***(2006.01)i; ***B29C 51/10***(2006.01)i; ***B29C 51/14***(2006.01)i; ***B29C 51/16***(2006.01)i; ***B32B 7/022***(2019.01)i; ***B32B 27/40***(2006.01)i; ***C08G 18/38***(2006.01)i; ***G02B 1/04***(2006.01)i; ***G02C 7/10***(2006.01)i
FI: G02C7/00; G02C7/10; B32B27/40; B32B7/022; B29C51/10; B29C51/14; B29C51/16; G02B1/04; C08G18/38 076

According to International Patent Classification (IPC) or to both national classification and IPC

**B. FIELDS SEARCHED**

Minimum documentation searched (classification system followed by classification symbols)

G02C7/00; B29C51/10; B29C51/14; B29C51/16; B32B7/022; B32B27/40; C08G18/38; G02B1/04; G02C7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-247335 A (MITSUI TOATSU CHEMICALS INC.) 26 September 1995 (1995-09-26) paragraphs [0029]-[0035], tables 1, 2 | 1-2 |
| Y | paragraphs [0029]-[0035], tables 1, 2 | 3-17 |
| X | JP 7-252341 A (MITSUI TOATSU CHEMICALS INC.) 03 October 1995 (1995-10-03) paragraphs [0033]-[0041], tables 3, 4 | 1-2 |
| Y | paragraphs [0033]-[0041], tables 3, 4 | 3-17 |
| Y | WO 2009/098886 A1 (MITSUI CHEMICALS, INC.) 13 August 2009 (2009-08-13) paragraphs [0070]-[0073], [0273], fig. 2 | 3, 14-17 |
| Y | WO 2022/009882 A1 (MITSUI CHEMICALS, INC.) 13 January 2022 (2022-01-13) table 2 | 4 |
| Y | JP 2021-509740 A (SKC CO., LTD.) 01 April 2021 (2021-04-01) paragraph [0029] | 5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 March 2023** | **11 April 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/002153**

**C. DOCUMENTS CONSIDERED TO BE RELEVANT**

| Category* | Citation of document, with indication, where appropriate, of the relevant passages | Relevant to claim No. |
|---|---|---|
| Y | WO 2017/047745 A1 (MITSUI CHEMICALS, INC.) 23 March 2017 (2017-03-23) paragraph [0119] | 6-7 |
| Y | WO 2019/009230 A1 (MITSUI CHEMICALS, INC.) 10 January 2019 (2019-01-10) paragraph [0170] | 6-7 |
| Y | WO 2018/221466 A1 (NIKON ESSILOR CO., LTD.) 06 December 2018 (2018-12-06) paragraph [0088] | 8-12 |
| Y | WO 2015/088013 A1 (MITSUI CHEMICALS, INC.) 18 June 2015 (2015-06-18) paragraph [0064] | 13 |
| A | US 2008/0090989 A1 (INSA (INSTITUT NATIONAL DES SCIENCES APPLIQUEES)) 17 April 2008 (2008-04-17) entire document | 1-17 |

Form PCT/ISA/210 (second sheet) (January 2015)

**INTERNATIONAL SEARCH REPORT**
**Information on patent family members**

International application No.
**PCT/JP2023/002153**

| Patent document cited in search report | Publication date (day/month/year) | Patent family member(s) | Publication date (day/month/year) |
|---|---|---|---|
| JP 7-247335 A | 26 September 1995 | (Family: none) | |
| JP 7-252341 A | 03 October 1995 | (Family: none) | |
| WO 2009/098886 A1 | 13 August 2009 | US 2009/0201584 A1<br>paragraphs [0107]-[0110], [0419], fig. 2<br>EP 2244111 A1<br>KR 10-2010-0093092 A<br>CN 101910892 A<br>BR PI0908369 A | |
| WO 2022/009882 A1 | 13 January 2022 | TW 202208478 A | |
| JP 2021-509740 A | 01 April 2021 | US 2020/0339731 A1<br>paragraph [0029]<br>WO 2019/139410 A1<br>KR 10-2001495 B1<br>CN 111566518 A | |
| WO 2017/047745 A1 | 23 March 2017 | US 2019/0048122 A1<br>paragraph [0294]<br>EP 3351574 A1<br>CN 108026240 A<br>KR 10-2018-0041180 A | |
| WO 2019/009230 A1 | 10 January 2019 | US 2020/0148856 A1<br>paragraph [0400]<br>EP 3650480 A1<br>CN 110831992 A | |
| WO 2018/221466 A1 | 06 December 2018 | US 2020/0096785 A1<br>paragraph [0156]<br>EP 3633418 A1<br>CN 110720056 A | |
| WO 2015/088013 A1 | 18 June 2015 | US 2016/0313575 A1<br>paragraph [0152]<br>EP 3081966 A1<br>CN 105793738 A<br>KR 10-2016-0083911 A<br>BR 112015020050 A | |
| US 2008/0090989 A1 | 17 April 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011058754 A
- JP 2014202904 A
- WO 2014125738 A
- WO 2011055540 A
- WO 2016125736 A
- WO 2009146509 A
- WO 201020770 A
- WO 2012149599 A
- WO 2012162725 A
- WO 2015137401 A
- JP 5417452 B
- JP 2022044196 A
- JP 2022044197 A